(19) 

**Europäisches Patentamt**
**European Patent Office**
**Office européen des brevets**

(11) **EP 4 651 540 A1**

(12) **EUROPEAN PATENT APPLICATION**
published in accordance with Art. 153(4) EPC

(43) Date of publication:
**19.11.2025 Bulletin 2025/47**

(21) Application number: **23923353.9**

(22) Date of filing: **23.02.2023**

(51) International Patent Classification (IPC):
***H04W 24/00*** (2009.01)

(52) Cooperative Patent Classification (CPC):
**H04W 24/00**

(86) International application number:
**PCT/CN2023/077963**

(87) International publication number:
**WO 2024/174176 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
- HUANGFU, Yourui
  Shenzhen, Guangdong 518129 (CN)
- WANG, Jian
  Shenzhen, Guangdong 518129 (CN)
- LI, Rong
  Shenzhen, Guangdong 518129 (CN)

(74) Representative: **Maiwald GmbH**
**Engineering**
**Elisenhof**
**Elisenstrasse 3**
**80335 München (DE)**

(54) **COMMUNICATION METHOD AND APPARATUS**

(57) A communication method and apparatus are provided to improve a speed and accuracy of multipath prediction. The method includes: receiving a first signal from a network device; determining first information, where the first information includes a receiving parameter of the first signal, or the first information includes a sending parameter and a receiving parameter of the first signal, the first information is used to determine a corresponding first grid cell of a path corresponding to the first signal in a preset geographical range, and the preset geographical range is divided into a plurality of grid cells; and sending a measurement result of the first signal to the network device, where the measurement result includes the first information. Data in a communication system is sent to the network device to train a multipath prediction model, so that the multipath prediction model can learn a multipath rule in the communication system, thereby improving accuracy and a prediction speed of multipath prediction and further obtaining a multipath characteristic through inference in an unknown communication scenario, to avoid repeated channel measurement.

FIG. 6

**Description**

TECHNICAL FIELD

This application relates to the field of communication technologies, and in particular, to a communication method and apparatus.

BACKGROUND

Multipath propagation means that signals arrive at a receive antenna through two or more paths in a radio propagation environment, reflection and diffraction for the signals by an object in the environment cause multiple paths, signals passing through different paths have different delays and phases, and the receive antenna receives a superimposition of the signals on the multiple paths. A multipath delay spread causes intersymbol interference, and cancellation caused by the multiple paths causes signal fading. Therefore, predicting the multiple paths in the radio propagation environment is critical to improving a service capability of a communication system. Predicting the multiple paths is predicting a possible multipath characteristic when a terminal device communicates with a network device at a spatial location, for example, a quantity of paths, strength of the path, an angle of the path, a multipath delay spread, and a multipath angle spread. A possible method for predicting the multiple paths is to model a real environment in a virtual physical world, to restore a size, a location, and a material of an object in the real world as much as possible. In the virtual physical world, a network device and a terminal device are placed at locations at which multiple paths need to be predicted, and then multiple paths between the network device and the terminal device are simulated by using a ray-tracing (Ray-tracing) method. However, the simulation method using ray-tracing has disadvantages of slow speed and low accuracy, and is not feasible.

SUMMARY

This application provides a communication method and apparatus, to improve a speed and accuracy of multipath prediction.

According to a first aspect, a communication method is provided. The method may be performed by a terminal device, or a chip, a chip system, or a circuit located in the terminal device. The method may be implemented by using the following steps: receiving a first signal from a network device; determining first information, where the first information includes a receiving parameter of the first signal, or the first information includes a sending parameter and a receiving parameter of the first signal, the first information is used to determine a corresponding first grid cell of a path corresponding to the first signal in a preset geographical range, and the preset geographical range is divided into a plurality of grid cells; and sending a measurement result of the first signal to the network device, where the measurement result includes the first information.

In embodiments of this application, data in a communication system is sent to the network device to train a multipath prediction model by the network device, so that the multipath prediction model can learn a multipath rule in a radio propagation environment of the communication system, thereby improving accuracy and a prediction speed of multipath prediction and further obtaining a multipath characteristic through inference in an unknown communication scenario, to avoid repeated channel measurement. In addition, the multipath prediction model is deployed on a network device side, and the network device trains the multipath prediction model, thereby helping improve accuracy and a prediction speed of multipath prediction, and further helping improve performance of the communication system.

In a possible design, the method further includes: determining, based on the first information, a first reference point corresponding to the first signal; and determining the first grid cell in the preset geographical range based on the first reference point corresponding to the first signal; and the measurement result of the first signal further includes indication information of the first grid cell. According to the foregoing design, the grid cell corresponding to the first signal may be used as training data of the multipath prediction model, so that the multipath prediction model can predict a grid cell in which there are multiple paths.

In a possible design, the method further includes: receiving second information from the network device, where the second information indicates a manner of determining the first reference point. In the foregoing manner, the network device and the terminal device can unify a manner of determining the first reference point, thereby helping improve accuracy of the multipath prediction model.

In a possible design, the method further includes: receiving third information from the network device, where the third information indicates a manner of obtaining the grid cells by dividing the preset geographical area. In the foregoing manner, the network device and the terminal device can unify a manner of obtaining the grid cells through division, so that the network device and the terminal device can generate a same grid cell in the preset geographical range, and have a same identifier for each grid cell, thereby helping improve accuracy of the multipath prediction model.

In a possible design, the measurement result may not include the first information, and the measurement result may include the indication information of the first grid cell (for example, an identifier of the first grid cell). In the foregoing manner, the first grid cell is reported, so that the multipath prediction model can predict the grid cell in which there are the multiple paths, and signaling overheads can be reduced when the first information is not carried.

In a possible design, the sending parameter of the first signal includes an angle of departure of the first signal.

In a possible design, the receiving parameter of the first signal includes at least one of the following: an angle of arrival of the first signal, time of arrival of the first signal, or signal strength of the first signal.

In a possible design, the method further includes: receiving fourth information from the network device, where the fourth information indicates related information of multipath distribution in the preset geographical range in a first time period. In the foregoing manner, the terminal device can be assisted in beam decision-making and blocking response in a future time period (that is, the first time period), thereby improving communication performance.

According to a second aspect, a communication method is provided. The method may be performed by a network device, or a chip, a chip system, or a circuit located in the network device. The method may be implemented by using the following steps: sending a first signal to a terminal device; receiving a measurement result of the first signal from the terminal device, where the measurement result includes first information, the first information includes a receiving parameter of the first signal, or the first information includes a sending parameter and a receiving parameter of the first signal, the first information is used to determine a corresponding first grid cell of a path corresponding to the first signal in a preset geographical range, and the preset geographical range is divided into a plurality of grid cells; and training a multipath prediction model based on the measurement result, where the multipath prediction model is used to predict a multipath characteristic for communication between the terminal device and a network device in the preset geographical range.

In embodiments of this application, data in a communication system is sent to the network device to train a multipath prediction model, so that the multipath prediction model can learn a multipath rule in the communication system, thereby improving accuracy and a prediction speed of multipath prediction and further obtaining a multipath characteristic through inference in an unknown communication scenario, to avoid repeated channel measurement. In addition, the multipath prediction model is deployed on a network device side, and the network device trains the multipath prediction model, thereby helping improve accuracy and a prediction speed of multipath prediction, and further helping improve performance of the communication system.

In a possible design, the measurement result of the first signal further includes indication information of the first grid cell. According to the foregoing design, the grid cell corresponding to the first signal may be used as training data of the multipath prediction model, so that the multipath prediction model can predict a grid cell in which there are multiple paths.

In a possible design, the method further includes: sending third information to the terminal device, where the third information indicates a manner of obtaining the grid cells by dividing the preset geographical area. In the foregoing manner, the network device and the terminal device can unify a manner of determining the first reference point, thereby helping improve accuracy of the multipath prediction model.

In a possible design, the method further includes: sending second information to the terminal device, where the second information indicates a manner of determining a first reference point of the first signal, the first reference point is determined based on the first information, and the first reference point is used to determine the first grid cell. In the foregoing manner, the network device and the terminal device can unify a manner of obtaining the grid cells through division, so that the network device and the terminal device can generate a same grid cell in the preset geographical range, and have a same identifier for each grid cell, thereby helping improve accuracy of the multipath prediction model.

In a possible design, the first information includes the receiving parameter of the first signal, and the method further includes: determining, based on the sending parameter of the first signal, a second reference point corresponding to the first signal; determining a second grid cell in the preset geographical range based on the second reference point; and determining a third grid cell based on the first grid cell and the second network area; and training the multipath prediction model based on the measurement result includes: training the multipath prediction model based on the first information in the measurement result and the third grid cell.

If the first information includes the receiving parameter of the first signal but does not include the sending parameter of the first signal, that is, the terminal device does not obtain a beam configuration of the network device, the first grid cell determined by the terminal device may be inaccurate. In the foregoing manner, the network device corrects, based on the grid cell determined by the network device, the grid cell determined by the terminal device, to help improve accuracy of the multipath prediction model.

In a possible design, the first information includes the receiving parameter and the sending parameter of the first signal, and the method further includes: determining, based on the first information, a first reference point corresponding to the first signal; and determining the first grid cell in the preset geographical range based on the first reference point; and training the multipath prediction model based on the measurement result includes: training the multipath prediction model based on the measurement result and the first grid cell.

In the foregoing manner, compared with a manner in which the terminal device reports the first grid cell, a manner in which the network device determines the grid cell corresponding to the first signal can reduce signaling overheads.

In a possible design, the sending parameter of the first signal includes an angle of departure of the first signal.

In a possible design, the receiving parameter of the first signal includes at least one of the following: an angle of arrival of the first signal, time of arrival of the first signal, or signal strength of the first signal.

In a possible design, the method further includes: determining location information of the terminal device in a first time period based on current location information and at least one piece of historical location information that are of the terminal device, where a start moment of the first time period is not earlier than current time; determining multipath distribution in the preset geographical range in the first time period based on the location information of the terminal device in the first time period and the multipath prediction model; and sending fourth information to the terminal device, where the fourth information indicates related information of multipath distribution in the preset geographical range in the first time period. In the foregoing manner, the terminal device can be assisted in beam decision-making and blocking response in a future time period (that is, the first time period), thereby improving communication performance.

In a possible design, input data of the multipath prediction model includes at least one of the following: environment information of the preset geographical range, location information of the network device, and location information of the terminal device; and output information of the multipath prediction model includes multipath information corresponding to each grid cell in the preset geographical range.

In a possible design, the multipath information includes at least one of the following parameters of each path: a confidence, an angle of departure of a signal, an angle of arrival of the signal, signal strength, or time of arrival of the signal, and the confidence indicates a probability that there are multiple paths in a corresponding grid cell.

According to a third aspect, a communication method is provided. The method may be performed by a terminal device, or a chip, a chip system, or a circuit located in the terminal device. The method may be implemented by using the following steps: receiving a first signal from a network device; determining a sending parameter and a receiving parameter of the first signal; determining, based on the sending parameter and the receiving parameter of the first signal, a corresponding first grid cell of a path corresponding to the first signal in a preset geographical range, and the preset geographical range is divided into a plurality of grid cells; and training a multipath prediction model based on the sending parameter of the first signal, the receiving parameter of the first signal, and the first grid cell, where the multipath prediction model is used to predict a multipath characteristic for communication between the terminal device and the network device in the preset geographical range.

In embodiments of this application, the terminal device trains the multipath prediction model by using data in a communication system, so that the multipath prediction model can learn a multipath rule in the communication system, thereby improving accuracy and a prediction speed of multipath prediction and further obtaining a multipath characteristic through inference in an unknown communication scenario, to avoid repeated channel measurement. In addition, the multipath prediction model is deployed on a terminal device side, and the terminal device trains the multipath prediction model, so that signaling overheads can be reduced.

In a possible design, training the multipath prediction model based on the sending parameter of the first signal, the receiving parameter of the first signal, and the first grid cell includes: inputting environment information of the preset geographical range, location information of the network device, and location information of the terminal device into the multipath prediction model, to obtain output data of the multipath prediction model, where the output data includes at least one of the following parameters of each path in each grid cell in the preset geographical range: a confidence, a sending parameter of a signal, or a receiving parameter of the signal, and the confidence indicates a probability that there are multiple paths in a corresponding grid cell; comparing the sending parameter of the first signal, the receiving parameter of the first signal, and the first grid cell with the output data of the multipath prediction model, to obtain a comparison result; and adjusting the multipath prediction model based on the comparison result.

According to the foregoing design, the multipath prediction model can learn a multipath rule in a communication system, thereby improving accuracy of multipath prediction and further obtaining a multipath characteristic through inference in an unknown communication scenario, to avoid repeated channel measurement.

In a possible design, the method further includes: receiving the environment information of the preset geographical range and/or the location information of the network device from the network device. According to the foregoing design, the terminal device can obtain input data of the multipath prediction model, thereby helping improve accuracy of multipath prediction.

In a possible design, determining, based on the sending parameter and the receiving parameter of the first signal, the corresponding first grid cell of the path corresponding to the first signal in the preset geographical range includes: determining, based on the sending parameter and the receiving parameter of the first signal, a reference point corresponding to the first signal; and determining the first grid cell based on the reference point corresponding to the first signal.

In a possible design, the method further includes: receiving first information from the network device, where the first information indicates a manner of determining the reference point. In the foregoing manner, the network device and the terminal device can unify a manner of determining the first reference point, thereby helping improve accuracy of the multipath prediction model.

In a possible design, the method further includes: receiving second information from the network device, where the second information indicates a manner of obtaining the grid cells by dividing the preset geographical area. In the foregoing manner, the network device and the terminal device can unify a manner of obtaining the grid cells through division, so that the network device and the terminal device can generate a same grid cell in the preset geographical range, and have a same identifier for each grid cell, thereby helping improve accuracy of the multipath prediction model.

In a possible design, the sending parameter includes an angle of departure of a signal.

In a possible design, the receiving parameter includes at least one of the following: an angle of arrival of the signal, time of arrival of the signal, or signal strength.

According to a fourth aspect, a communication method is provided. The method may be performed by a network device, or a chip, a chip system, or a circuit located in the network device. The method may be implemented by using the following steps: sending a first signal to a terminal device; and sending at least one of the following to the terminal device: environment information of a preset geographical range, location information of the network device, first information, or second information, where the first information indicates a manner of determining a reference point, the reference point is used to determine a corresponding first grid cell of a path corresponding to the first signal in the preset geographical range, and the second information indicates a manner of obtaining grid cells by dividing the preset geographical area.

In the foregoing manner, the environment information of the preset geographical range and the location information of the network device are sent to the terminal device, so that the terminal device can obtain input data of the multipath prediction model, thereby improving accuracy of multipath prediction.

The first information is sent to the terminal device, so that the network device and the terminal device can unify a manner of determining the first reference point, thereby helping improve accuracy of the multipath prediction model.

The second information is sent to the terminal device, so that the network device and the terminal device can unify a manner of obtaining the grid cells through division, and the network device and the terminal device can generate a same grid cell in the preset geographical range, and have a same identifier for each grid cell, thereby helping improve accuracy of the multipath prediction model.

According to a fifth aspect, this application further provides a communication apparatus. The apparatus is a terminal device or a chip in the terminal device. The communication apparatus has functions of implementing any method provided in the first aspect or the third aspect. The communication apparatus may be implemented by hardware, or may be implemented by executing corresponding software by hardware. The hardware or the software includes one or more units or modules corresponding to the foregoing function.

In a possible design, the communication apparatus includes a processor. The processor is configured to support the communication apparatus in performing a corresponding function of the method execution body in the foregoing method. The communication apparatus may further include a memory. The memory may be coupled to the processor, and the memory stores program instructions and data that are necessary for the communication apparatus. Optionally, the communication apparatus further includes a communication interface. The communication interface is configured to support communication between the communication apparatus and a device such as a network device, for example, data or signal receiving and sending. For example, a communication interface may be a transceiver, a circuit, a bus, a module, or another type of communication interface.

In a possible design, the communication apparatus includes corresponding function modules respectively configured to implement the steps in the foregoing methods. The function may be implemented by hardware, or may be implemented by executing corresponding software by hardware. The hardware or software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the first aspect or the third aspect. The details are not described herein again. For example, the processing unit may be a processor, and the communication unit may be a transceiver or a communication interface. It may be understood that, if the apparatus is a terminal device, the transceiver may be implemented by using an antenna, a feeder, a codec, or the like in the apparatus; or if the apparatus is a chip (system) or a circuit disposed in the terminal device, the communication unit may be a communication interface, a communication circuit, a pin, or the like of the chip (system) or the circuit.

According to a sixth aspect, this application further provides a communication apparatus. The apparatus is a network device or a chip in the network device. The communication apparatus has functions of implementing any method provided in the second aspect or the fourth aspect. The communication apparatus may be implemented by hardware, or may be implemented by executing corresponding software by hardware. The hardware or the software includes one or more units or modules corresponding to the foregoing function.

In a possible design, the communication apparatus includes a processor. The processor is configured to support the communication apparatus in performing a corresponding function of the method execution body in the foregoing method. The communication apparatus may further include a memory. The memory may be coupled to the processor, and the memory stores program instructions and data that are necessary for the communication apparatus. Optionally, the communication apparatus further includes a communication interface. The communication interface is configured to support communication between the communication apparatus and a device such as a terminal device, for example, data or signal receiving and sending. For example, a communication interface may be a transceiver, a circuit, a bus, a module, or another type of communication interface.

In a possible design, the communication apparatus includes corresponding function modules respectively configured to implement the steps in the foregoing methods. The function may be implemented by hardware, or may be implemented by executing corresponding software by hardware. The hardware or software includes one or more modules corresponding to the foregoing function.

In a possible design, a structure of the communication apparatus includes a processing unit (or a processing module) and a communication unit (or a communication module). These units may perform corresponding functions in the foregoing method examples. For details, refer to the descriptions in the method provided in the second aspect or the fourth aspect. The details are not described herein again. For example, the processing unit may be a processor, and the communication unit may be a transceiver or a communication interface. It may be understood that, if the apparatus is a network device, the transceiver may be implemented by using an antenna, a feeder, a codec, or the like in the apparatus; or if the apparatus is a chip (system) or a circuit disposed in the network device, the communication unit may be a communication interface, a communication circuit, a pin, or the like of the chip (system) or the circuit.

According to a seventh aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the first aspect or the third aspect and the possible designs by using a logic circuit or executing code instructions.

According to an eighth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method in any one of the second aspect or the fourth aspect and the possible designs by using a logic circuit or executing code instructions.

According to a ninth aspect, a computer-readable storage medium is provided. The computer-readable storage medium stores a computer program or instructions. When the computer program or the instructions are executed by a processor, the method in any one of the first aspect, the second aspect, the third aspect, or the fourth aspect and the possible designs is implemented.

According to a tenth aspect, a computer program product storing instructions is provided. When the instructions are run by a processor, the method in any one of the first aspect, the second aspect, the third aspect, or the fourth aspect and the possible designs is implemented.

According to an eleventh aspect, a chip system is provided. The chip system includes a processor, and may further include a memory, configured to implement the method in any one of the first aspect, the second aspect, the third aspect, or the fourth aspect and the possible designs. The chip system may include a chip, or may include a chip and another discrete component.

According to a twelfth aspect, a communication system is provided. The system includes the apparatus (for example, a terminal device) in the first aspect and the apparatus (for example, a network device) in the second aspect.

According to a thirteenth aspect, a communication system is provided. The system includes the apparatus (for example, a terminal device) in the third aspect and the apparatus (for example, a network device) in the fourth aspect.

For technical effect that can be achieved by the technical solutions in any one of the fifth aspect to the thirteenth aspect, refer to descriptions of technical effect that can be achieved by the technical solutions in the first aspect, the second aspect, the third aspect, or the fourth aspect. Repeated parts are not described again.

BRIEF DESCRIPTION OF DRAWINGS

FIG. 1 is a diagram of an architecture of a communication system according to an embodiment of this application;
FIG. 2 is a diagram of division into grid cells according to an embodiment of this application;
FIG. 3 is a diagram of a structure of a multipath prediction model according to an embodiment of this application;
FIG. 4 is a diagram of a structure of a multipath prediction model according to an embodiment of this application;
FIG. 5 is a diagram of a training manner of training a multipath prediction model according to an embodiment of this application;

FIG. 6 is a schematic flowchart of a communication method according to an embodiment of this application;

FIG. 7A is a diagram of division into grid cells according to an embodiment of this application;

FIG. 7B is a diagram of first two dimensions of an output tensor of a multipath prediction model according to an embodiment of this application;

FIG. 7C is a diagram of an output tensor of a multipath prediction model according to an embodiment of this application;

FIG. 8 is a schematic flowchart of a communication method according to an embodiment of this application;

FIG. 9 is a diagram of a structure of a communication apparatus according to an embodiment of this application; and

FIG. 10 is a diagram of a structure of a communication apparatus according to an embodiment of this application.

DESCRIPTION OF EMBODIMENTS

To make objectives, technical solution, and advantages of embodiments of this application clearer, the following further describes embodiments of this application in detail with reference to the accompanying drawings.

The technologies provided in embodiments of this application may be applied to various communication systems, for example, a 4th generation (4th generation, 4G) communication system (for example, a long term evolution (Long Term Evolution, LTE) system), a 5th generation (5th generation, 5G) communication system, a worldwide interoperability for microwave access (worldwide interoperability for microwave access, WiMAX) or a wireless local area network (wireless local area network, WLAN) system, a converged system of multiple systems, or a future communication system, for example, a 6th generation (6th generation, 6G) communication system. The 5G communication system may also be referred to as a new radio (new radio, NR) system.

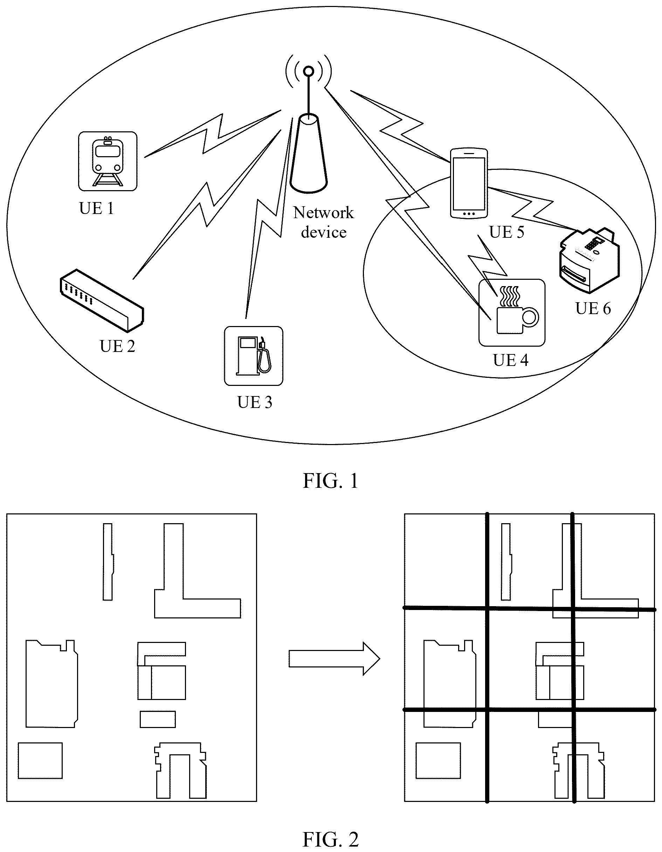

FIG. 1 shows a communication system according to an embodiment of this application. The communication system includes a network device and six terminal devices, namely, UE 1 to UE 6. In the communication system, the UE 1 to the UE 6 may send uplink data to the network device, and the network device may receive the uplink data sent by the UE 1 to the UE 6. In addition, the UE 4 to the UE 6 may also form a communication subsystem. The network device may send downlink information to the UE 1, the UE 2, the UE 3, and the UE 5, and the UE 5 may send the downlink information to the UE 4 and the UE 6 based on a device-to-device (device-to-device, D2D) technology.

It should be noted that a quantity and types of devices in the communication system shown in FIG. 1 are merely used as examples. Embodiments of this application are not limited thereto. In actual application, the communication system may further include more terminal devices and more network devices, and may further include another network element, for example, may include a core network element and a network management device such as an operation, administration and maintenance (operation administration and maintenance, OAM) network element.

The network device may be a base station (base station, BS). The network device may also be referred to as an access network device, an access node (access node, AN), or a radio access node (radio access node, RAN). The base station may be in a plurality of forms, such as a macro base station, a micro base station, a relay station, or an access point. The network device may be connected to a core network (for example, an LTE core network or a 5G core network), and the network device may provide a wireless access service for the terminal device. For example, the network device includes but is not limited to at least one of the following: a base station in 5G, such as a transmission reception point (Transmission Reception Point, TRP) or a next-generation NodeB (next generation NodeB, gNB), a network device in an open radio access network (open radio access network, O-RAN) or a module included in the network device, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmission reception point, TRP), a transmission point (transmission point, TP), and/or a mobile switching center. Alternatively, the network device may be a radio unit (radio unit, RU), a central unit (central unit, CU), a distributed unit (distributed unit, DU), a central unit control plane (CU control plane, CU-CP) node, or a central unit user plane (CU user plane, CU-UP) node. Alternatively, the network device may be a vehicle-mounted device, a wearable device, a network device in a future evolved public land mobile network (public land mobile network, PLMN), or the like. In some deployments of the network device, the network device may alternatively be an open radio access network (open radio access network, ORAN) architecture or the like. For example, the network device shown in embodiments of this application may be an access network device in an ORAN, a module in the access network device, or the like. In an ORAN system, a CU may also be referred to as an open (open, O)-CU, a DU may also be referred to as an O-DU, a CU-DU may also be referred to as an O-CU-DU, a CU-UP may also be referred to as an O-CU-UP, and an RU may also be referred to as an O-RU.

In embodiments of this application, a communication apparatus configured to implement a function of the network device may be a network device, or may be a network device having a part of the function of the network device, or may be an apparatus, for example, a chip system, a hardware circuit, a software module, or a hardware circuit and a software module, that can support the network device in implementing the function. The communication apparatus may be installed in the network device or used in a matching manner with the network device. In the method in embodiments of this application, an example in which the communication apparatus configured to implement the function of the network device is a network device is used for description.

The terminal device is also referred to as a terminal, user equipment (user equipment, UE), a mobile station (mobile station, MS), a mobile terminal (mobile terminal, MT), or the like. The terminal device may be a device that provides voice and/or data connectivity for a user. The terminal device may communicate with one or more core networks via the network device. The terminal device may be deployed on land, including an indoor device, an outdoor device, a handheld device, and/or a vehicle-mounted device, may be deployed on a water surface (for example, on a ship), or may be deployed in air (for example, on an airplane, a balloon, or a satellite). The terminal device is a handheld device having a wireless connection function, another processing device connected to a wireless modem, a vehicle-mounted device, or the like. The terminal device may be a portable, pocket-sized, handheld, computer built-in, or vehicle-mounted mobile apparatus. Examples of some terminal devices are: a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a wireless network camera, a mobile phone (mobile phone), a tablet computer, a notebook computer, a palmtop computer, a mobile internet device (mobile internet device, MID), a wearable device such as a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal such as a smart fueler in a smart city (smart city), a terminal device on a high-speed railway, and a wireless terminal in a smart home (smart home), such as a smart speaker, a smart coffee machine, and a smart printer.

In embodiments of this application, a communication apparatus configured to implement a function of the terminal device may be a terminal device, may be a terminal device having a part of the function of the terminal, or may be an apparatus, for example, a chip system, that can support the terminal device in implementing the function. The communication apparatus may be installed in the terminal device or used in a matching manner with the terminal device. In embodiments of this application, the chip system may include a chip, or may include a chip and another discrete component. In the technical solutions provided in embodiments of this application, an example in which the communication apparatus configured to implement the function of the terminal device is a terminal device is used for description.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

It should be noted that in this application, in "sending information/data to A" and "sending information/data", "sending to A" and "sending" merely indicate a transmission direction of the information/data, A is a destination, and "sending information/data to A" is not limited to sending over an air interface. "Sending information/data to A" includes directly sending the information/data to A and indirectly sending the information/data to A. Therefore, "sending information/data to A" may also be understood as "outputting information/data to A" through a communication interface of a processing unit. Similarly, "sending information/data" may also be understood as "outputting information/data".

Similarly, "receiving information/data from A" and "receiving information/data" merely indicate a transmission direction of the information/data. "From A" indicates that the information/data is from A, including directly receiving the information/data from A and indirectly receiving the information/data from A. Therefore, "receiving information/data from A" may also be understood as "receiving information/data from A" through a communication interface of a processing unit. Similarly, "receiving information/data from A" may also be understood as "inputting information/data".

The following describes technical characteristics in embodiments of this application.

Multipath propagation means that signals arrive at a receive antenna through two or more paths in a radio propagation environment, reflection and diffraction for the signals by an object in the environment cause multiple paths, signals passing through different paths have different delays and phases, and the receive antenna receives a superimposition of the signals on the multiple paths. A multipath delay spread causes intersymbol interference, and cancellation caused by the multiple paths causes signal fading. Therefore, predicting the multiple paths in the radio propagation environment is critical to improving a service capability of a communication system. Predicting the multiple paths is predicting a possible multipath characteristic when a terminal device communicates with a network device at a spatial location, for example, a quantity of paths, strength of the path, an angle of the path, a multipath delay spread, and a multipath angle spread. A possible method for predicting the multiple paths is to model a real environment in a virtual physical world, to restore a size, a location, and a material of an object in the real world as much as possible. In the virtual physical world, a network device and a terminal device are placed at locations at which multiple paths need to be predicted, and then multiple paths between the network device and the terminal device are simulated by using a ray-tracing (Ray-tracing) method. However, the simulation method using ray-tracing has disadvantages of complex calculation and slow speed, and there is a difference between the simulated multiple paths and the multiple paths in the real radio propagation environment.

In view of this, embodiments of this application provide a communication method and apparatus, to improve a speed and accuracy of multipath prediction. The method and the apparatus are based on a same inventive concept. Because the method and the apparatus have a similar problem-resolving principle, for implementations of the apparatus and the method, refer to each other, and repeated parts are not described.

In embodiments of this application, a mapping relationship between a radio propagation environment and multiple paths is learned in a data-driven manner by using data actually collected by a communication system. The data-driven manner herein may be learning a hidden rule in the data based on a large amount of actually collected data via a neural network, for example, an artificial intelligence (artificial intelligence, AI)/machine learning (machine learning, ML) method. Specifically, in this application, a multipath characteristic of the radio propagation environment is obtained through inference by learning a mapping from the radio propagation environment to the multiple paths by using a neural network model. For ease of description, the foregoing neural network model is referred to as a multipath prediction model below. It should be understood that the multipath prediction model is merely an example name of the model, and a name of the model is not limited in this application.

Optionally, in this application, the multipath prediction model may be further trained based on data collected through a non-air interface, for example, simulation data. For example, the multipath prediction model may be pre-trained based on the data collected through the non-air interface, for example, the simulation data, and then further trained based on actually collected data. Compared with a manner in which real data collected through an air interface is separately used for training, a manner in which the real data collected through the air interface and the simulation data collected through the non-air interface are together used for training can reduce calculation overheads and measurement overheads of a device.

The following describes the multipath prediction model in this application.

The multipath prediction model may output a plurality of vectors, and these vectors may be one-to-one mapped to a plurality of grid cells obtained by dividing a preset geographical range. For example, the preset geographical range may be a predefined area range, for example, a rectangular area that is 300 meters long and 500 meters wide on the ground, a circular area that is centered on a point and that is with a radius of 200 meters on the ground, or an area that is surrounded by any geometric shape on the ground. The preset geographical range covers a potential propagation path between a network device and a terminal device as much as possible. As shown in FIG. 2, the preset geographical range is divided into 3*3 grids (grid), and there are nine grid cells (grid cell) in total. For each grid cell, the multipath prediction model may predict characteristics of N paths, where N is an integer greater than 0. Therefore, if the preset geographical range is divided into X*Y grid cells, the multipath prediction model may predict characteristics of a maximum of X*Y*N paths, where X and Y are integers greater than 0, and X and Y may be the same or may be different. This is not specifically limited herein. It should be noted that herein, only an example in which quantities of paths predicted by using the multipath prediction model for all grid cells are the same is used for description. Whether the quantities of paths predicted for all the grid cells are the same is not limited in this application.

Optionally, the preset geographical range may alternatively be an area range of three-dimensional space, for example, a cuboid area that is 300 meters long, 500 meters wide, and 30 meters high on the ground, or an area surrounded by any three-dimensional geometric shape. Similarly, the three-dimensional preset geographical range may be divided into X*Y*Z three-dimensional grid cells. X*Y represents a quantity of grid cells obtained through division on the ground, and Z represents a quantity of grids obtained through division in a height direction. Therefore, there are X*Y*Z three-dimensional grid cells in total. The multipath prediction model may predict characteristics of a maximum of X*Y*Z*N paths, where X, Y, and Z are integers greater than 0, and X and Y may be the same or may be different from Z. This is not specifically limited herein. It should be noted that when Z is equal to 1, the preset geographical range is not distinguished in the height direction, and may be considered as a two-dimensional area range. Herein, only an example in which Z is equal to 1 is used for description. A value of Z is not limited in this application.

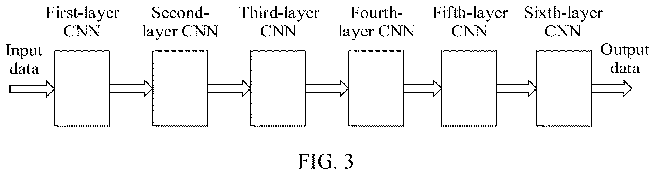

The multipath prediction model may use a multi-layer convolutional neural network (convolutional neural network, CNN) structure. For example, as shown in FIG. 3, the multipath prediction model may use a six-layer CNN structure. It should be understood that a neural network structure used in the multipath prediction model is not limited in this application.

In this application, input data of the multipath prediction model may include at least one of the following: environment information of the preset geographical range, location information of the network device, or location information of the terminal device, and may further include other parameters of the terminal device and/or the network device, such as an operating frequency and an antenna direction. This is not specifically limited herein. For example, the environment information meets the preset geographical range.

The environment information may include an object contour in the preset geographical range such as a building contour, a contour of a natural landscape such as a mountain or a river, a contour of an object such as a flower, a grass, or a tree, and a contour of an object that is in an environment and that is sensed by a network device or a terminal device, and may further include information such as a building material and a reflection coefficient of a signal, or may further include other information that affects signal transmission. Details are not listed one by one herein.

The environment information may be image data, for example, an aerial image, a radar sensing image, a satellite remote sensing image, a terminal sensing image, a picture taken by a terminal, or an image sensed by a network device. Alternatively, the environment information may be data in a diagram form, and the data in a diagram form may include information such as a building layout and an object contour. Alternatively, the environment information may be data in a map form, and the data in a map form may include related information such as a road, a water system, and a tree. Alternatively, the environment information may be multi-dimensional tensor data. Dimensions of the tensor data may be c*x*y*z, x, y, and z correspond to maximum ranges of an environment respectively on an x-axis, a y-axis, and a z-axis in space, c corresponds to different types of the environment information, and a value of the tensor data is descriptions on different spatial locations and different types of the environment information. Alternatively, the environment information may be point cloud data, or the like.

In an example for description, a location of the network device and/or a location of the terminal device may be reflected in the environment information through longitude and latitude coordinates. The operating frequency and the antenna direction of the network device and/or the terminal device may also be reflected in the environment information. For example, a sector size may represent the operating frequency, and a sector direction may represent the cell antenna direction.

Output information of the multipath prediction model may include multipath information corresponding to each grid cell in the preset geographical range. For example, the multipath information includes at least one of the following parameters of each path: a confidence, an angle of departure, an angle of arrival, signal strength, time of arrival (delay), and the like.

The confidence indicates a probability that there is a path. For example, a value range of the confidence may be 0 to 1. A higher confidence indicates a higher probability that there is a path. For example, 0 indicates that there is no path, and 1 indicates that there is a path.

The angle of departure may include at least one of an azimuth and an elevation. The angle of departure may also be referred to as an angle of departure of a path, an angle of departure of the path, an angle of departure of a signal, an angle of sending of the signal, an angle of a sending beam of the signal, or the like.

The angle of arrival may include at least one of an azimuth and an elevation. The angle of arrival may also be referred to as an angle of arrival of a signal, an angle of arrival of a path, an angle of receiving of the signal, an angle of a receiving beam of the signal, or the like.

The signal strength may also be referred to as signal strength of a path, a reference signal received power (reference signal received power, RSRP), a signal-to-noise ratio (signal to noise ratio, SNR), a path loss (path loss), or the like. The time of arrival may also be referred to as time of arrival of a signal, a delay of the signal, time of flight (time of flight, TOF) of the signal on a propagation path, or the like.

The input data and the output data of the multipath prediction model may be in a tensor (tensor) form, that is, in a multidimensional data form.

In a possible implementation, when there are a plurality of paths in one grid cell, if the multipath prediction model predicts a characteristic of one path for one grid cell (that is, N=1), the multipath prediction model may predict a path with strongest signal strength in the grid cell, and discard another path. Similarly, if the multipath prediction model predicts characteristics of two paths for one grid cell (that is, N=2), the multipath prediction model may predict only two paths with strongest signal strength in the grid cell, and by analogy.

For ease of understanding, a structure shown in FIG. 3 is used as an example to describe the multipath prediction model.

It is assumed that input data of the multipath prediction model is environment information of a preset geographical range, location information of a network device, and location information of a terminal device. For example, image data of environment information 256*256 of the preset geographical range is used as an example. Input data of the multipath prediction model may be 256*256*3, where 3 represents three channels of the environment information of the preset geographical range. One channel represents the environment information of the preset geographical range, one channel represents a location of the network device in the preset geographical range, and one channel represents a location of the terminal device in the preset geographical range.

It is assumed that the preset geographical range is divided into 8*8 grid cells, that is, X=8 and Y=8. The multipath prediction model predicts multipath information of one path (that is, N=1) for each grid cell. For example, the multipath information includes five parameters: a confidence, an angle of departure, an angle of arrival, signal strength, and time of arrival. Dimensions of output data of the multipath prediction model may be 8*8*5. It should be noted that, in the foregoing example, the angle of departure includes an azimuth or an elevation, and the angle of arrival may include an azimuth or an elevation. If the angle of departure includes two parameters: the azimuth and the elevation, the angle of arrival may include the azimuth or the elevation. The multipath information includes six parameters: a confidence, an azimuth of departure, an elevation of departure, an angle of arrival, signal strength, and time of arrival. Dimensions of output data of the multipath prediction model may be 8*8*6. Similarly, if the angle of departure includes two parameters: an azimuth and an elevation, the angle of arrival may include two parameters: an azimuth and an elevation. The multipath information includes seven parameters: a confidence, an azimuth of departure, an elevation of departure, an azimuth of arrival, an elevation of arrival, signal strength, and time of arrival. Dimensions of output data of the multipath prediction model may be 8*8*7.

For example, parameters of a first-layer CNN of the structure shown in FIG. 3 may be (3, 64, 7, 4, 3), where 3 is a quantity of input channels, 64 is a quantity of output channels, 7 is a size of a convolution kernel, 4 is a stride, and 3 is padding. After input data is processed through the first-layer CNN, dimensions become 64*64*64. Parameters of a second-layer CNN may be (64, 128, 3, 2, 1), and after second-layer CNN processing, dimensions become 32*32* 128. Parameters of a third-layer CNN may be (128, 256, 3, 2, 1), and after third-layer CNN processing, dimensions become 16* 16*256. Parameters of a fourth-layer CNN may be (256, 256, 3, 2, 1), and after fourth-layer CNN processing, dimensions become 8*8*256. Parameters of a fifth-layer CNN may be (256, 5, 3, 1, 1), and after fifth-layer CNN processing, dimensions become 8*8*5. In this way, 8*8 eigenvectors (one-to-one correspond to the 8*8 grid cells) are output by processing the environment information with a length of 256 and a width of 256 by using the multipath prediction model. Each eigenvector has a length of 5, and corresponds to a multipath characteristic in a corresponding grid cell, that is, a confidence, an angle of departure, an angle of arrival, signal strength, and time of arrival.

It should be understood that the foregoing parameters are merely examples for description. The neural network structure of the multipath prediction model is not limited in this application, and may include a convolutional neural network, a recurrent neural network (recurrent neural network, RNN), a residual network (residual network, ResNet), a transformer (Transformer) network, or the like. Specifically, a quantity of network layers, a connection relationship between layers, and a parameter of each layer are not limited.

In this application, the multipath prediction model may be trained by using a plurality of groups of training data, and any group of training data may include input data and label data. The input data may include environment information of a preset geographical range, location information of a network device, and location information of a terminal device. The label data may include information about a path corresponding to a reference signal (for example, an uplink reference signal or a downlink reference signal, and for ease of understanding of the solution, the downlink reference signal is used as an example for descriptions in this application) transmitted between the network device and the terminal device and information about a grid cell corresponding to the path. The information about the path corresponding to the reference signal may include a confidence, an angle of departure, an angle of arrival, signal strength, time of arrival, and the like of the path corresponding to the reference signal. The grid cell corresponding to the path may be determined based on information about the path. A specific determining manner is described below. For example, the downlink reference signal is used as an example. If the terminal device correctly parses out a reference signal transmitted on a path, it may be understood that there is a path, and a confidence is 1.

In a possible implementation, the label data may be processed into a same format as the output data of the multipath prediction model. For example, the output data of the multipath prediction model may be a three-dimensional tensor: X*Y*(N*M), where X*Y indicates that the preset geographical area is divided into X*Y grid cells, N*M indicates that eigenvectors that are of N paths and that are with a length of M are output for each grid cell, and each eigenvector represents a multipath characteristic of a corresponding path, that is, a confidence, an angle of departure, an angle of arrival, signal strength, and time of arrival.

For example, the eigenvectors of the N paths may be sorted according to a predefined rule, for example, sorted according to signal strength, for example, sorted in ascending order of the signal strength, or sorted in descending order of the signal strength. The predefined rule is not specifically limited in this application.

For a grid cell in which there is no path or a grid cell in which there are a quantity of paths less than N, confidences in vectors of a path that does not exist in the grid cell are all 0, that is, it indicates that there is no path, and a value of another multipath characteristic may be any value. For example, for a grid cell in which there is no path, confidences in N eigenvectors in the grid cell are all 0, which indicates that there is no path in the grid cell, and a value of another multipath characteristic may be any value. For another example, for a grid cell in which there are n paths, n is an integer greater than 0 and less than N, and confidences in n eigenvectors in the grid cell are all 1, which indicates that there is a path in the grid cell, and a value of another multipath characteristic is a value corresponding to the path. Confidences in N-n eigenvectors in the grid cell are all 0, which indicates that there is no path in the grid cell, and a value of another multipath characteristic may be any value. In a possible implementation, during output, the n eigenvectors may be arranged in front of the N-n eigenvectors. Further, the n eigenvectors may be sorted according to a predefined rule.

The input data is input into the multipath prediction model, to obtain the output data of the multipath prediction model. The output data of the multipath prediction model is compared with the label data, so that the multipath prediction model can learn a mapping from input to output through stochastic gradient descent (stochastic gradient descent, SGD). For example, for training of the multipath prediction model, a loss value between the output data and the label data may be first calculated, a gradient is calculated based on the loss value, and a parameter of the neural network is updated by using a stochastic gradient descent method. After a plurality of rounds of training update, the output data of the multipath prediction model is closer to the label data, the loss value is smaller, and the multipath prediction model gradually converges. When the loss value meets a preset condition, training of the multipath prediction model is completed.

The foregoing example of the multipath prediction model is used as an example. The dimensions of the output data of the multipath prediction model are 8*8*5, that is, the 8*8 eigenvectors (corresponding to the 8*8 grid cells) are output, and the length of each eigenvector is 5. The five-dimensional eigenvector may include: [a confidence

(Confidence), an angle of departure (angle of departure, AOD), an angle of arrival (angle of arrival, AOA), signal strength (Strength), and time of arrival (time of arrival, TOA)].

For example, calculation of the loss value may be shown in the following formula, and includes three parts. $loss_1$ is a mean squared error (mean squared error, MSE) between output data corresponding to a grid cell with a confidence of 1 in the label data and a four-dimensional eigenvector (that is, [an angle of departure AoD, an angle of arrival AoA, signal strength Strength, and time of arrival ToA]) of the label data. A quantity of samples input into the neural network each time is B, and is referred to as a batch size (batch size) B. Calculating the mean squared error is calculating a mean squared error for the B samples. $loss_2$ is a mean squared error between the output data corresponding to the grid cell with the confidence of 1 in the label data and a confidence of the label data. $loss_3$ is a mean squared error between output data corresponding to a grid cell with a confidence of 0 in the label data and the confidence of the label data. A total loss value is a sum of the three loss values. A gradient is calculated based on the total loss value to update a parameter of the multipath prediction model.

$$loss_1: MSE\ difference\ of\left([AoD, AoA, Strength, ToA]|_{confidence==1}\right);$$

$$loss_2: MSE\ difference\ of\left(confidence|_{confidence==1}\right);$$

$$loss_3: MSE\ difference\ of\left(confidence|_{confidence==0}\right);$$

and

$$loss = loss_1 + loss_2 + loss_3.$$

In this application, a value of X/Y may be increased, to divide the preset geographical range into grid cells with a smaller granularity and a larger quantity, so that more paths can be predicted.

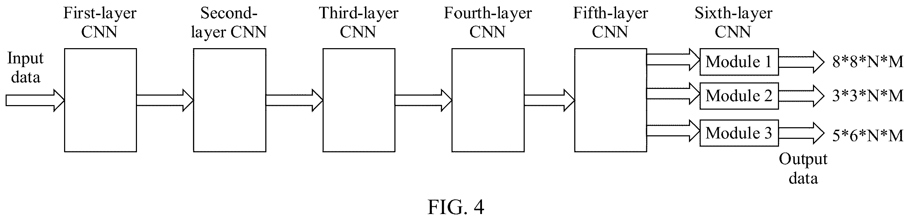

In a possible implementation, a last layer of the multipath prediction model may include a plurality of parallel modules, and each module corresponds to a manner of obtaining grid cells through division. For example, the last layer of the multipath prediction model includes three parallel modules. Dimensions of output data of a module 1 are 8*8*N*M, which indicates that the preset geographical range is divided into 8*8 grid cells by using the multipath prediction model, and N eigenvectors with a length of M are output for each grid cell, and represent multipath characteristics of N paths in the grid cell, that is, a confidence, an angle of departure, an angle of arrival, signal strength, and time of arrival. Dimensions of output data of a module 2 are 3*3*N*M, which indicates that the preset geographical range is divided into 3*3 grid cells by using the multipath prediction model, and N eigenvectors with a length of M are output for each grid cell, and represent multipath characteristics of N paths in the grid cell, that is, a confidence, an angle of departure, an angle of arrival, signal strength, and time of arrival. Dimensions of output data of a module 3 are 5*5*N*M, which indicates that the preset geographical range is divided into 5*5 grid cells by using the multipath prediction model, and N eigenvectors with a length of M are output for each grid cell, and represent multipath characteristics of N paths in the grid cell, that is, a confidence, an angle of departure, an angle of arrival, signal strength, and time of arrival. For example, with reference to the structure shown in FIG. 3, a structure of the multipath prediction model may be shown in FIG. 4.

Alternatively, in this application, a value of N may be increased, so that the multipath prediction model can predict more paths for each grid cell. This can prevent a path from being discarded, thereby improving accuracy of multipath prediction.

In embodiments of this application, the multipath prediction model may be a single-side model or a dual-side model. This is not specifically limited in this application. The single-side model means that the multipath prediction model is deployed on a network device side or a terminal device side. The dual-side model means that a part of modules of the multipath prediction model is deployed on a network device side, and the other part of modules is deployed on a terminal device side. If the multipath prediction model is deployed on the network device side, because a processing capability of the network device is stronger, accuracy and a prediction speed of multipath prediction are improved, and performance of the communication system is improved. The following uses the single-side model as an example to describe a training process of the multipath prediction model.

Training data of the multipath prediction model may be data collected through an air interface, or may be data collected through a non-air interface, or may be data collected through an air interface and data collected through a non-air interface. This is not specifically limited in this application. Air interface collection refers to measurement data of signal receiving and sending between the terminal device and the network device, and non-air interface collection refers to simulation data, test field data, or the like. Compared with the simulation data or the test field data collected through the non-air interface, the data collected through the air interface can improve accuracy of multipath prediction, and help the terminal device or the network device update the multipath prediction model according to a requirement, to adapt to a variety of channel environments. In an example, the data collected through the non-air interface may be used to pre-train the multipath prediction model, to provide an initial value for a neural network parameter and a weight of the multipath prediction model. In this way, based on a pre-trained multipath prediction model, the model is fine-tuned (fine-tune) by using a small amount of data collected through the air interface, so that the model can be quickly converged, and overheads of data collection through the air interface is reduced.

A process of training the multipath prediction model may be performed through online training or an offline training. This is not specifically limited in this application. Online training means that the multipath prediction model is trained each time some training data is collected. Offline training means that the multipath prediction model is trained after sufficient training data is collected.

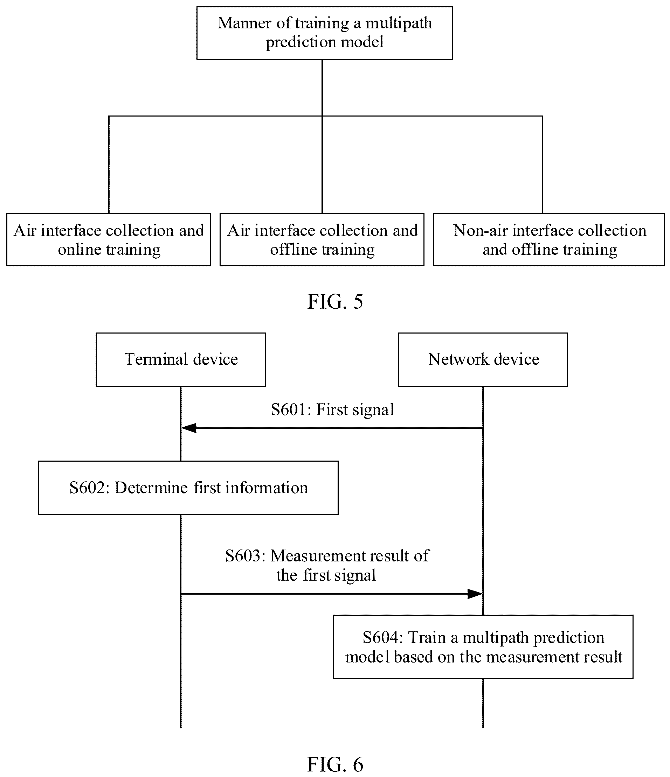

For example, a manner of training the multipath prediction model may be shown in FIG. 5.

The foregoing describes the multipath prediction model. When the multipath prediction model is deployed in the communication system, the training data needs to be collected, and then the multipath prediction model is trained based on the training data. After the multipath prediction model is obtained, the multipath characteristic may be predicted by using the trained multipath prediction model, to assist in improving performance of the communication system. The following describes a training process and an application scenario of a multipath prediction model in a communication system.

Embodiment 1

An example in which a multipath prediction model is deployed on a network device side is used. FIG. 6 shows a communication method provided in an embodiment of this application. The method may be applied to the communication system shown in FIG. 1. For ease of understanding, this embodiment is described from perspectives of a terminal device side and the network device side. It should be understood that this does not constitute a limitation on this application. This application is improved on either the terminal device side or the network device side. Specifically, the method may be applied to a terminal device and a network device, or may be applied to a chip or a chipset/chip system of the terminal device and the network device. The following provides descriptions by using an example in which the method is applied to the terminal device and the network device. The communication method may specifically include the following steps.

S601: The network device sends a first signal to the terminal device. Correspondingly, the terminal device receives the first signal from the network device.

In a possible implementation, the network device may send a signal in a beam sweeping manner. The terminal device may also receive the signal in the beam sweeping manner. For example, if the network device has 64 candidate beams, and the terminal device has four candidate beams, 256 beam sweeping times need to be performed for complete beam sweeping, and 256 signals need to be sent. The first signal may be a signal that is sent by the network device through a transmit beam and that is received by the terminal device through a receive beam.

The beam may be considered as a resource. Beamforming not only can provide a gain, but also can determine an angle of departure and an angle of arrival of a propagation path based on a beam selected by the terminal device, to infer a location of the terminal device.

For example, the first signal may be a channel state information reference signal (channel state information reference signal, CSI-RS), or the first signal may be a positioning reference signal (positioning reference signal, PRS), or may be another reference signal. This is not specifically limited herein.

S602: The terminal device determines first information.

The first information includes a receiving parameter of the first signal. In a possible scenario, the terminal device does not obtain a related configuration, for example, a beam configuration, for sending the first signal by the network device. In this scenario, the first information may include the receiving parameter of the first signal, and does not include a sending parameter of the first signal.

Alternatively, the first information includes a sending parameter and a receiving parameter of the first signal. In a possible scenario, the terminal device pre-obtains a related configuration, for example, a beam configuration, for sending the first signal by the network device. In this scenario, the first information includes the receiving parameter and the sending parameter of the first signal.

For example, the sending parameter of the first signal may include an angle of departure of the first signal.

The receiving parameter of the first signal may include at least one of the following: an angle of arrival of the first signal, time of arrival of the first signal, or signal strength of the first signal.

In an optional solution, the terminal device may determine the angle of departure of the first signal based on an angle of a transmit beam of the first signal, and determine the angle of arrival of the first signal based on an angle of a receive beam of the first signal. The angle of the transmit beam of the first signal may be determined based on an identifier that is of the transmit beam and that is carried in the first signal and the beam configuration of the network device. The angle of the receive beam of the first signal may be determined based on an identifier that is of the receive beam and that is of the first signal and a beam configuration of the terminal device.

In an example description, when a narrow beam is used for sweeping, if a plurality of paths can be distinguished in time domain, only a path with strongest signal strength (strongest tap) may be reserved. A path corresponding to the first signal may be the path with strongest signal strength in the plurality of paths, and the angle of departure or the angle of arrival is an angle of a beam corresponding to the narrow beam. "Reserving a path with strongest signal strength" means that only a characteristic (such as time of arrival, signal strength, an angle of departure, and an angle of arrival) of the path is used in subsequent calculation. When a wide beam is used for sweeping, if a plurality of paths may be distinguished in both angle domain and time domain, a characteristic (such as time of arrival, signal strength, an angle of departure, and an angle of arrival) of each path may be calculated and reserved for subsequent calculation.

The first information is used to determine a corresponding first grid cell of the path corresponding to the first signal in a preset geographical range, and the preset geographical range is divided into a plurality of grid cells.

The network device and the terminal device may unify a manner of obtaining the grid cells by dividing the preset geographical range, so that the network device and the terminal device can generate a same grid cell in the preset geographical range, and have a same ID for each grid cell.

In a possible implementation, the manner of obtaining the grid cells by dividing the preset geographical range may be determined by the network device, or may be determined by the terminal device, or may be defined in a protocol, or may be preconfigured in another manner. This is not specifically limited herein.

If the manner of obtaining the grid cells through division is determined by the network device, the network device may send third information to the terminal device, where the third information indicates the manner of obtaining the grid cells by dividing the preset geographical area.

In a possible implementation, the network device and the terminal device may pre-store a same division rule table. The division rule table may include one or more manners of obtaining the grid cells through division and corresponding IDs. Therefore, the network device may indicate the manner of obtaining the grid cells by dividing the preset geographical area by indicating the ID in the division rule table. The terminal device may obtain a corresponding manner of obtaining the grid cell through division in a table lookup manner.

For example, the division rule table may be shown in Table 1.

Table 1

| ID | Longitude range | Latitude range | Quantity of grid cells |
|---|---|---|---|
| 1 | (x1, x1) | (yl, y1) | X=3, Y=3 |
| 2 | (x2, x2) | (y2, y2) | X=16, Y=8 |
| ... | ... | ... | ... |

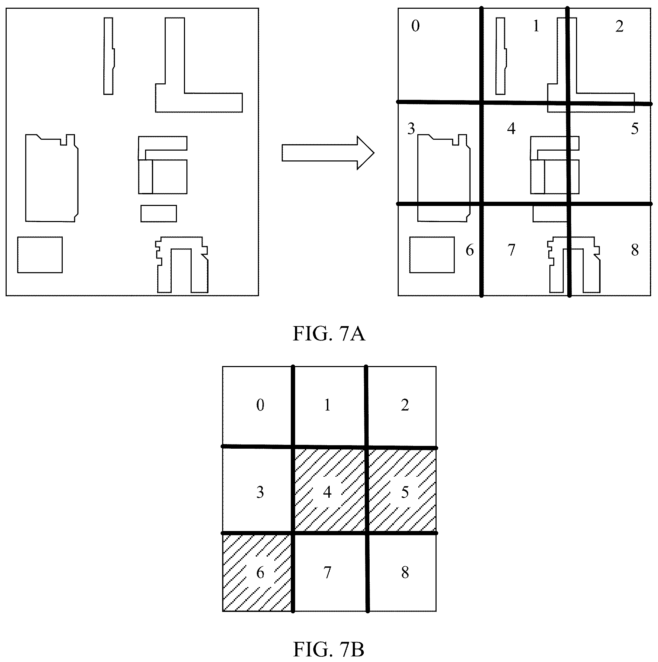

The network device may indicate the ID in Table 1 to the terminal device. The terminal device may obtain, in the table lookup manner, longitude and latitude ranges and a quantity of grid cells obtained through division that correspond to the indicated ID, so that the grid cells can be obtained through division based on a longitude direction and a latitude direction. Optionally, the grid cells can be obtained through even division by the network device and the terminal device in the longitude direction and the latitude direction based on the quantity of grid cells, and an extra indication is required for a non-even division solution. For example, the network device and the terminal device may arrange identifiers (identification, ID) of the grid cells in a manner of first gradually increasing from west to east in a longitude direction, and then gradually increasing from north to south in a latitude direction, for example, as shown in FIG. 7A.

S603: The terminal device sends a measurement result of the first signal to the network device. Correspondingly, the network device receives the measurement result from the terminal device.

The following describes content included in the measurement result with reference to two examples.

Example 1: The measurement result of the first signal includes the first information.

In this example, training data of the multipath prediction model may include the first information, that is, the network device may use the first information as the training data to train the multipath prediction model. Correspondingly, output data of the multipath prediction model includes a parameter corresponding to the first information. For example, the first information includes one or more of an angle of arrival of the first signal, time of arrival of the first signal, and signal strength of the first signal. Corresponding output data of the multipath prediction model may include one or more of an angle of arrival, time of arrival, and signal strength of a signal. In other words, the multipath prediction model may predict one or more of an angle of arrival, time of arrival, and signal strength of a path.

The following describes the first grid cell with reference to two implementations of the first information.

Implementation 1: The first information includes the receiving parameter of the first signal and the sending parameter of the first signal.

In Embodiment 1, the terminal device may determine the first grid cell based on the first information, that is, the receiving parameter of the first signal and the sending parameter of the first signal, and report indication information of the first grid cell to the network device. For example, the measurement result of the first signal may further include the indication information of the first grid cell (for example, an identifier of the first grid cell).

For example, the measurement result may include the first information and the indication information of the first grid cell. For example, the first information may include {path 1: [DL-AoD#1, DL-AoA#1, DL-PRS-RSRP#1, ToA#1]}, where the path 1 is a path for transmitting the first signal, DL-AoD#1 is the angle of departure of the first signal, DL-AoA#1 is the angle of arrival of the first signal, DL-PRS-RSRP#1 is the signal strength of the first signal, and ToA#1 is the time of arrival of the first signal. It is assumed that the first grid cell is a grid cell 4. A confidence of the grid cell 4 is 1, which indicates that there is a path in the grid cell 4.

Optionally, the terminal device may determine the first grid cell in the following manner: The terminal device determines, based on the first information, a first reference point corresponding to the first signal; and the terminal device determines the first grid cell in the preset geographical range based on the first reference point corresponding to the first signal.

In the foregoing manner, a manner of determining the first reference point may be indicated by the network device. For example, the network device may send second information to the terminal device, where the second information indicates a manner of determining the first reference point. Alternatively, a manner of determining the first reference point may be determined by the terminal device and indicated to the network device, or may be preconfigured in another manner.

In a possible implementation, the network device and the terminal device may pre-store a same determining manner table. The determining manner table may include one or more manners of determining a reference point and corresponding IDs. Therefore, the network device may indicate the manner of determining the first reference point by indicating the ID in the determining manner table. The terminal device may obtain a corresponding determining manner in a table lookup manner.

For example, the determining manner table may be shown in Table 2.

Table 2

| ID | Calculation method |
|---|---|
| 1 | $$\dfrac{\left(UE_{pos} + \overrightarrow{aoa_x} * \dfrac{|TOA_x|}{2}\right) + \left(BS_{pos} + \overrightarrow{aod_x} * \dfrac{|TOA_x|}{2}\right)}{2}$$ |
| 2 | $$BS_{pos} + \overrightarrow{aod_x} * \dfrac{|TOA_x|}{2}$$ |
| ... | ... |

$aoa_x$ is an angle of arrival of a path whose identifier is x, $TOA_x$ is time of arrival of a signal transmitted on the path whose identifier is x, $aod_x$ is an angle of departure of the path whose identifier is x, $BS_{pos}$ is a location of the network device, and $UE_{pos}$ is a location of the terminal device.

In Table 2, a calculation method corresponding to the ID 1 indicates that starting from the location of the terminal device, a distance of half the time of arrival is traveled in a direction of the angle of arrival to arrive at a point A, and starting from the location of the network device, a distance of half the time of arrival is traveled in a direction of the angle of departure to arrive at the point B, and then a midpoint of the two points A and B is taken to obtain a reference point of the path. A calculation method corresponding to the ID 2 considers only the location and the angle of departure of the network device (this method may be applied to a scenario in which the location and the angle of arrival of the terminal device are not easily obtained), and indicates that starting from the location of the network device, a distance of half the time of arrival is traveled in a direction of the angle of departure to arrive at a point B, where the point B is a reference point of the path.

The foregoing may make the network device and the terminal device unify a manner of determining the reference point, thereby facilitating accuracy of multipath prediction.

In the calculation method in Table 2, when determining the first grid cell, the terminal device needs to know the location of the network device, beam information of the network device, and the location of the terminal device. The location of the network device and the beam information of the network device may be sent by the network device to the terminal device. The location of the terminal device may be obtained in a plurality of manners. For example, the terminal device is a positioning reference unit (positioning reference unit, PRU) device, and the location is known, or the terminal device may obtain the location information via a device such as a global positioning system (global positioning system, GPS).

Alternatively, the terminal device may estimate the location of the terminal device by using an NR positioning method. Alternatively, the network device may calculate the location of the terminal device and send the location to the terminal device. To obtain an accurate multipath delay measurement result, the terminal device may further obtain synchronization, a timing error, and the like of the network device.

Optionally, the terminal device may further determine the first grid cell in the following manner: determining a grid cell A based on the receiving parameter of the first signal in the first information, determining a grid cell B based on the sending parameter of the first signal in the first information, and determining the first grid cell based on the grid cell A and the grid cell B. The grid cell A may be the same as or different from the grid cell B. The first grid cell may be the same as or different from the grid cell A. The first grid cell may be the same as or different from the grid cell B.

For example, the terminal device determines corresponding grid cells based on receiving parameters of a signal 1, a signal 2, and a signal 3, as shown in Table 3.

Table 3

| Signal | Grid cell determined based on a receiving parameter | Angle of arrival | Signal strength | Time of arrival |
|---|---|---|---|---|
| Signal 1 | 4 | -60°/85° | -80 dBm | 300 ns |
| Signal 2 | 2 | 10°/88° | -110 dBm | 550 ns |
| Signal 3 | 3 | -120°/83° | -120 dBm | 600 ns |

The terminal device determines corresponding grid cells based on sending parameters of a signal 1, a signal 2, and a signal 3, as shown in Table 4.

Table 4

| Signal | Grid cell determined based on a sending parameter | Angle of departure | Time of arrival |
|---|---|---|---|
| Signal 1 | 4 | 120°/95° | 300 ns |
| Signal 2 | 8 | 60°/97° | 550 ns |
| Signal 3 | 7 | -150°/97° | 600 ns |

The terminal device may determine, based on the grid cells in Table 3 and the grid cells in Table 4, grid cells corresponding to signals 1 to 3, as shown in Table 5.

Table 5

| Signal | Grid cell | Angle of departure | Angle of arrival | Signal strength | Time of arrival |
|---|---|---|---|---|---|
| Signal 1 | 4 | 120°/95° | -60°/85° | -80 dBm | 300 ns |
| Signal 2 | 5 | 60°/97° | 10°/88° | -110 dBm | 550 ns |
| Signal 3 | 6 | -150°/97° | -120°/83° | -120 dBm | 600 ns |

In the foregoing example, the first signal may be any one of the signals 1 to 3.

If the first signal is the signal 1, the grid cell A is a grid cell determined based on the receiving parameter of the first signal, and as shown in Table 3, is the grid cell 4. The grid cell B is a grid cell determined based on the sending parameter of the first signal, and as shown in Table 4, is the grid cell 4. The first grid cell is determined based on the grid cell A and the grid cell B, and as shown in Table 5, is the grid cell 4.

If the first signal is the signal 2, the grid cell A is a grid cell determined based on the receiving parameter of the first signal, and as shown in Table 3, is the grid cell 2. The grid cell B is a grid cell determined based on the sending parameter of the first signal, and as shown in Table 4, is the grid cell 8. The first grid cell is determined based on the grid cell A and the grid cell B, and as shown in Table 5, is the grid cell 5.

If the first signal is the signal 3, the grid cell A is a grid cell determined based on the receiving parameter of the first signal, and as shown in Table 3, is the grid cell 3. The grid cell B is a grid cell determined based on the sending parameter of the first signal, and as shown in Table 4, is the grid cell 7. The first grid cell is determined based on the grid cell A and the grid cell B, and as shown in Table 5, is the grid cell 6.

For example, a manner in which the terminal device determines the grid cell A based on the receiving parameter of the first signal in the first information may be similar to a manner in which the terminal device determines the first grid cell based on the receiving parameter and the sending parameter of the first signal. A manner in which the terminal device determines the grid cell B based on the sending parameter of the first signal in the first information may be similar to a manner in which the terminal device determines the first grid cell based on the receiving parameter and the sending parameter of the first signal. For details, refer to the foregoing descriptions. Details are not described herein again.

For example, after the network device and the terminal device complete sweeping of all beam combinations (for example, if the network device has 64 beams, and the terminal device has 4 beams, a total of 64*4=256 sweeping times are performed, that is, a reference signal of the first signal is sent for 256 times, and 256 measurement times are performed), there are a total of three beam combinations whose signal strength exceeds a preset threshold (that is, there are only three paths in the 256 beam combinations, and signal strength on other paths is lower than the preset threshold). The terminal device obtains angles of departure and angles of arrival of the three beam combinations based on IDs of the three beam combinations and beam configurations. The terminal device determines the first grid cell based on the angles of departure and the angles of arrival of the three beam combinations, and the signal strength and the time of arrival of the first signal.

Optionally, compared with a case in which the multipath prediction model is trained by using a measurement result of sending the first signal once, the multipath prediction model may be trained by using measurement results of sending the first signal for a plurality of times (for example, all beams are swept, that is, the first signal is sent for 256 times), thereby improving accuracy of the multipath prediction model.

In Embodiment 2, the network device may determine the first grid cell based on the first information, that is, the receiving parameter of the first signal and the sending parameter of the first signal.

Optionally, a manner in which the network device determines the first grid cell is similar to the manner in which the terminal device determines the first grid cell. For details, refer to the foregoing descriptions.

In the foregoing two embodiments, the training data of the multipath prediction model may further include the indication information of the first grid cell, that is, the network device may further use the indication information of the first grid cell as the training data to train the multipath prediction model. Correspondingly, the output data of the multipath prediction model further includes information about the grid cell. In other words, the multipath prediction model may further predict a grid cell in which there is a path. In a possible implementation, N*M is equal to 1, that is, output dimensions of the multipath prediction model are X*Y*1, an output value indicates whether there are multiple paths in X*Y grids, and a value range is from 0 to 1. A value closer to 1 indicates that there are multiple paths in the grid.

Implementation 2: The first information includes the receiving parameter of the first signal, but does not include the sending parameter of the first signal. In other words, the terminal device does not obtain a beam configuration of the network device (that is, does not obtain the sending parameter of the first signal).

In a first implementation, the terminal device may determine the first grid cell based on the receiving parameter of the first signal, and send the first grid cell to the network device. For example, the measurement result of the first signal may further include indication information of the first grid cell.

Optionally, for the foregoing implementation, refer to the foregoing process in which the terminal device determines the grid cell A based on the receiving parameter of the first signal. Details are not described herein again.

In a second implementation, the network device may determine the first grid cell based on the receiving parameter of the first signal.

Optionally, for the foregoing implementation, refer to the foregoing process in which the terminal device determines the grid cell A based on the receiving parameter of the first signal. Details are not described herein again.

In the foregoing two implementations, the first grid cell may be inaccurate. In view of this, further optionally, the network device may determine, based on the sending parameter of the first signal, a second reference point corresponding to the first signal; determine a second grid cell in the preset geographical range based on the second reference point; and determine a third grid cell based on the first grid cell and the second grid cell. The second grid cell may be the same as or different from the first grid cell. The third grid cell may be the same as or different from the first grid cell. The third grid cell may be the same as or different from the second grid cell.

The foregoing first implementation is used as an example for description. The terminal device determines the corresponding grid cells based on the receiving parameters of the signal 1, the signal 2, and the signal 3, as shown in Table 3 above.

The network device determines the corresponding grid cells based on the sending parameters of the signal 1, the signal 2, and the signal 3, as shown in Table 4 above.

The network device may determine, based on the grid cells determined by the network device and the grid cells determined by the terminal device, the grid cells corresponding to the signals 1 to 3, as shown in Table 5 above.

In the foregoing example, the first signal may be any one of the signals 1 to 3.

If the first signal is the signal 1, the first grid cell is a grid cell determined by the terminal device, and as shown in Table 3, is the grid cell 4. The second grid cell is a grid cell determined by the network device, and as shown in Table 4, is the grid cell 4. The third grid cell is determined by the network device based on the first grid cell and the second grid cell, and as shown in Table 5, is the grid cell 4.

If the first signal is the signal 2, the first grid cell is a grid cell determined by the terminal device, and as shown in Table 3, is the grid cell 2. The second grid cell is a grid cell determined by the network device, and as shown in Table 4, is the grid cell 8. The third grid cell is determined by the network device based on the first grid cell and the second grid cell, and as shown in Table 5, is the grid cell 5.

If the first signal is the signal 3, the first grid cell is a grid cell determined by the terminal device, and as shown in Table 3, is the grid cell 3. The second grid cell is a grid cell determined by the network device, and as shown in Table 4, is the grid cell 7. The third grid cell is determined by the network device based on the first grid cell and the second grid cell, and as shown in Table 5, is the grid cell 6.

In a third implementation, the network device may determine a third grid cell based on the sending parameter of the first signal and the first information.

Optionally, a process in which the network device may determine the third grid cell based on the sending parameter of the first signal and the first information is similar to the process in which the network device determines the first grid cell based on the sending parameter of the first signal and the receiving parameter of the first signal. Details are not described herein again.

Based on the foregoing three implementations, when training the multipath prediction model, the network device may train the multipath prediction model based on the first information in the measurement result and the third grid cell. In other words, the training data of the multipath prediction model may further include indication information of the third grid cell, that is, the network device may further use the indication information of the third grid cell as the training data to train the multipath prediction model.

Example 2: The measurement result of the first signal includes indication information of the first grid cell. In Example 2, the measurement result of the first signal may not include the first information. For a specific manner of determining the first grid cell, refer to the related descriptions in Embodiment 1 of Implementation 1 in Example 1. Details are not described herein again.

In some embodiments, the terminal device may send the measurement result in the following manner: The terminal device may associate the first information with the indication information of the first grid cell, and then send the measurement result in a radio resource control (radio resource control, RRC) message to the network device.

For example, the measurement result may further include a layer 1 reference signal received power (layer 1-reference signal received power, L1-RSRP), a channel impulse response (channel impulse response, CIR) in time domain, a channel frequency response (channel frequency response, CFR), a power delay profile (power delay profile, PDP).

S604: The network device trains the multipath prediction model based on the measurement result. For a specific training process, refer to the foregoing descriptions of the multipath prediction model. Details are not described herein again.

Optionally, after receiving the measurement result, the network device may convert the measurement result into a form of an output tensor of the multipath prediction model. For example, an example in which the measurement result includes the content in Table 5 is used. The network device may convert the measurement result into data with dimensions of 3*3*5.

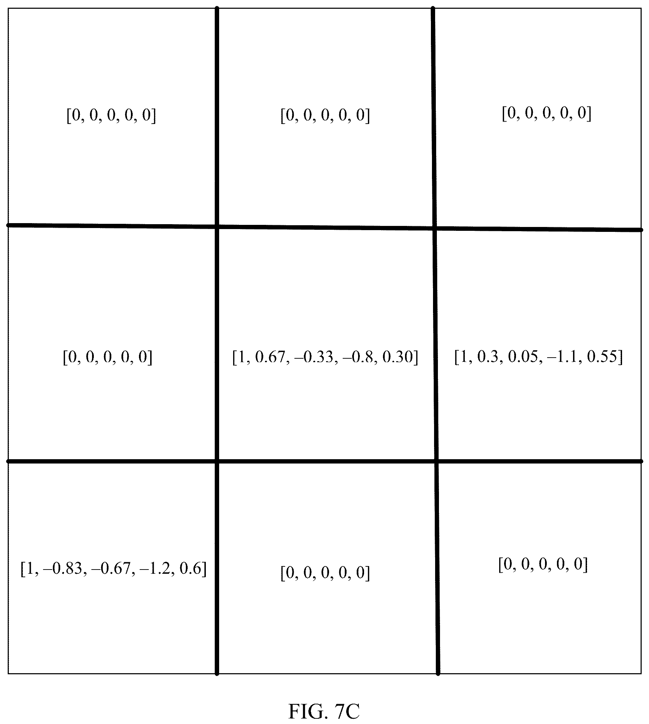

As shown in FIG. 7B, the preset geographical range shown in FIG. 7B includes three grid cells horizontally and three grid cells vertically, which represents first two dimensions of the output tensor of the multipath prediction model, that is, 3*3. Based on the measurement result shown in Table 5, eigenvectors with a length of 5 are respectively filled in tensor locations numbered 4, 5, and 6 (corresponding to the grid cells respectively identified as 4, 5, and 6). For example, the eigenvector at the tensor location numbered 4 (corresponding to the grid cell identified as 4) is [1, 120/a, -60/a, -80/b, 300/c]. a, b, and c are preset values, and are used for data normalization, to avoid excessively large values. For example, a=180, b=100, and c=1000. For the tensor locations numbered 5 and 6, similar processing is performed. In a tensor location at which there is no path (for example, tensor locations numbered 0, 1, 2, 3, 7, and 8), [0, 0, 0, 0, 0] may be filled, a 1st value is 0, and the other four values may also be any value. Through the foregoing processing, a tensor of 3*3*5 may be obtained. An example in which a=180, b=100, and c=1000 is used. That the content in Table 5 is converted into the form of the output tensor of the multipath prediction model may be shown in FIG. 7C.

After training of the multipath prediction model is completed, the network device may predict multipath characteristics of the network device and the terminal device in the preset geographical range by using a trained multipath prediction model.

In an application solution, the network device may predict a delay spread, a beam direction, a key grid cell, and the like by using the trained multipath prediction model, and adjust a communication parameter based on the output data of the multipath prediction model, for example, perform channel prediction, Doppler compensation, and timing advance (timing advance, TA) compensation, adjust a reference signal measurement period, adjust a transmit/receive beam of the network device, and adjust a transmit/receive beam of the terminal device.

In a specific application solution, the network device may determine location information of the terminal device in a first time period based on current location information and at least one piece of historical location information that are of the terminal device, where a start moment of the first time period is not earlier than current time. The network device determines multipath distribution in the preset geographical range in the first time period based on the location information of the terminal device in the first time period and the multipath prediction model. The network device sends fourth information to the terminal device, where the fourth information indicates related information of multipath distribution in the preset geographical range in the first time period, for example, information about each path in each grid cell in the preset geographical range and an identifier of the key grid cell.

For example, the key grid cell may be an identifier of a grid cell in which there is a path in the preset geographical range. Alternatively, the key grid cell may be an identifier of a grid cell in which there is no path in the preset geographical range. Alternatively, the key grid cell may be an identifier of a grid cell in which there is a path whose signal strength is greater than a threshold in the preset geographical range, or the like. Alternatively, the key grid cell may be an identifier of a grid cell in which there is a path whose signal strength is not greater than a threshold in the preset geographical range, or the like. Alternatively, the key grid cell may be an identifier of a grid cell of a path with a strongest signal and/or an identifier of a grid cell of a path with a weakest signal in the preset geographical range, or the like.

In the foregoing manner, the terminal device can be assisted in beam decision-making and blocking response in a future time period (that is, the first time period), thereby improving communication performance.

In embodiments of this application, data in a commercial and diversified network deployment device and a complex and diversified environment is collected, so that the multipath prediction model has excellent performance, scenario scalability, and robustness of environment change.

Compared with the ray tracing solution, the solution provided in embodiments of this application has a faster prediction speed. In addition, ray-tracing is based on a virtual environment, and a difference between the virtual environment and a real environment is affected by modeling accuracy. The environment information is input into a neural network (that is, the multipath prediction model) in the form of the tensor, so that integrity of the environment information can be ensured as much as possible.

In addition, operating efficiency of the communication system can be improved based on environment prior information (that is, the collected training data). An objective law of the physical world is fully used, so that the neural network (that is, the multipath prediction model) learns the law, thereby obtaining a multipath characteristic through inference in an unknown scenario, to avoid repeated channel measurement. A network parameter is preadjusted, to replace a passive network with an active network.

In addition, the multipath prediction model is deployed on the network device side, and the network device trains the multipath prediction model, thereby helping improve accuracy and a prediction speed of multipath prediction, and further helping improve performance of the communication system.

Embodiment 2: A difference between Embodiment 2 and Embodiment 1 lies in that, in Embodiment 1, the multipath prediction model is deployed on the network device side, and the terminal device sends related data (such as the first information) of the first signal to the network device after collecting the related data, so that the network device trains the multipath prediction model, however in Embodiment 2, the multipath prediction model is deployed on a terminal device side, and the terminal device trains the multipath prediction model after collecting related data (such as first information) of the first signal, and does not need to send the related data to the network device. In addition, in Embodiment 1, because the network device may obtain information such as the environment information of the preset geographical range and the location of the network device, the input data of the multipath prediction model may be directly obtained, however in Embodiment 2, the terminal device may obtain information such as the environment information of the preset geographical range and the location of the network device from the network device, to obtain the input data of the multipath prediction model.

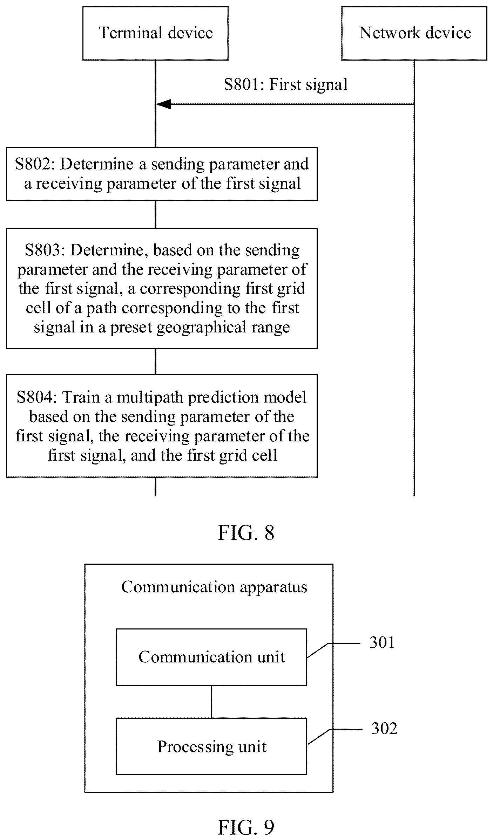

An example in which a multipath prediction model is deployed on the terminal device side is used. FIG. 8 shows a communication method provided in an embodiment of this application. The method may be applied to the communication system shown in FIG. 1. For ease of understanding, this embodiment is described from perspectives of the terminal device side and a network device side. It should be understood that this does not constitute a limitation on this application. This application is improved on either the terminal device side or the network device side. Specifically, the method may be applied to a terminal device and a network device, or may be applied to a chip or a chipset/chip system of the terminal device and the network device. The following provides descriptions by using an example in which the method is applied to the terminal device and the network device. The communication method may specifically include the following steps.

S801: The network device sends a first signal to the terminal device. Correspondingly, the terminal device receives the first signal from the network device.

For details, refer to the related descriptions of S601. Details are not described herein again.

S802: The terminal device determines a sending parameter and a receiving parameter of the first signal.

For details, refer to the related descriptions of determining, by the terminal device, the sending parameter and the receiving parameter of the first signal in S602. Details are not described herein again.

S803: The terminal device determines, based on the sending parameter and the receiving parameter of the first signal, a corresponding first grid cell of a path corresponding to the first signal in a preset geographical range, and the preset geographical range is divided into a plurality of grid cells.

In an implementation, the terminal device may determine the first grid cell in the following manner: The terminal device determines, based on the sending parameter and the receiving parameter of the first signal, a first reference point corresponding to the first signal; and the terminal device determines the first grid cell in the preset geographical range based on the first reference point corresponding to the first signal.

In the foregoing manner, a manner of determining the first reference point may be indicated by the network device. Alternatively, a manner of determining the first reference point may be determined by the terminal device and indicated to the network device, or may be preconfigured in another manner.

For details about an implementation solution in which the network device indicates the manner of determining the first reference point to the terminal device, refer to the related descriptions in the method in FIG. 6.

Optionally, in this manner, the network device and the terminal device may unify a manner of obtaining the grid cells by dividing the preset geographical range, so that the network device and the terminal device can generate a same grid cell in the preset geographical range, and have a same ID for each grid cell.

In a possible implementation, the manner of obtaining the grid cells by dividing the preset geographical range may be determined by the network device, or may be determined by the terminal device, or may be defined in a protocol, or may be preconfigured in another manner. This is not specifically limited herein. If the manner of obtaining the grid cells through division is determined by the network device, the network device indicates a manner of obtaining the grid cells through division by the terminal device. For a specific indication manner, refer to the related descriptions in the method in FIG. 6.

S804: The terminal device trains a multipath prediction model based on the sending parameter of the first signal, the receiving parameter of the first signal, and the first grid cell. For a specific training process, refer to the foregoing descriptions of the multipath prediction model. Details are not described herein again.

Optionally, the terminal device may obtain the environment information of the preset geographical range and/or the location information of the network device from the network device, and the obtained environment information of the preset geographical range and/or the obtained location information of the network device may be used as the input data of the multipath prediction model to train the multipath prediction model.

After training of the multipath prediction model is completed, the terminal device may predict multipath characteristics of the network device and the terminal device in the preset geographical range by using a trained multipath prediction model. For a specific application scenario, refer to the related descriptions in embodiments. Details are not described herein again.

In embodiments of this application, data in a commercial and diversified network deployment device and a complex and diversified environment is collected, so that the multipath prediction model has excellent performance, scenario scalability, and robustness of environment change.

Compared with the ray tracing solution, the solution provided in embodiments of this application has a faster prediction speed. In addition, ray-tracing is based on a virtual environment, and a difference between the virtual environment and a real environment is affected by modeling accuracy. The environment information is input into a neural network (that is, the multipath prediction model) in the form of the tensor, so that integrity of the environment information can be ensured as much as possible.

In addition, operating efficiency of the communication system can be improved based on environment prior information (that is, the collected training data). An objective law of the physical world is fully used, so that the neural network (that is, the multipath prediction model) learns the law, thereby obtaining a multipath characteristic through inference in an unknown scenario, to avoid repeated channel measurement. A network parameter is preadjusted, to replace a passive network with an active network.

In addition, the multipath prediction model is deployed on a terminal device side, and the terminal device trains the multipath prediction model, so that signaling overheads can be reduced.

Based on a same inventive concept as the method embodiments, an embodiment of this application provides a communication apparatus. A structure of the communication apparatus may be shown in FIG. 9, and the communication apparatus includes a communication unit 301 and a processing unit 302.

In an implementation, the communication apparatus may be specifically configured to implement the method performed by the terminal device in the embodiment in FIG. 6. The apparatus may be the terminal device, may be a chip or a chip set in the terminal device, or a part of the chip that is configured to perform a related method function. The communication unit 301 is configured to receive a first signal from a network device; and the processing unit 302 is configured to determine first information, where the first information includes a receiving parameter of the first signal, or the first information includes a sending parameter and a receiving parameter of the first signal, the first information is used to determine a corresponding first grid cell of a path corresponding to the first signal in a preset geographical range, and the preset geographical range is divided into a plurality of grid cells, where the communication unit 301 is further configured to send a measurement result of the first signal to the network device, where the measurement result includes the first information.

Optionally, the processing unit 302 is further configured to: determine, based on the first information, a first reference point corresponding to the first signal; and determine the first grid cell in the preset geographical range based on the first reference point corresponding to the first signal; and the measurement result of the first signal further includes indication information of the first grid cell.

Optionally, the communication unit 301 is further configured to receive second information from the network device, where the second information indicates a manner of determining the first reference point.

Optionally, the communication unit 301 is further configured to receive third information from the network device, where the third information indicates a manner of obtaining the grid cells by dividing the preset geographical area.

For example, the sending parameter of the first signal includes an angle of departure of the first signal.

For example, the receiving parameter of the first signal includes at least one of the following: an angle of arrival of the first signal, time of arrival of the first signal, or signal strength of the first signal.

Optionally, the communication unit 301 is further configured to receive fourth information from the network device, where the fourth information indicates related information of multipath distribution in the preset geographical range in a first time period.

In an implementation, the communication apparatus may be specifically configured to implement the method performed by the network device in the embodiment in FIG. 6. The apparatus may be the network device, may be a chip or a chip set in the network device, or a part of the chip that is configured to perform a related method function. The communication unit 301 is configured to: send a first signal to a terminal device, and receive a measurement result of the first signal from the terminal device, where the measurement result includes first information, the first information includes a receiving parameter of the first signal, or the first information includes a sending parameter and a receiving parameter of the first signal, the first information is used for a corresponding first grid cell of a path corresponding to the first signal in a preset geographical range, and the preset geographical range is divided into a plurality of grid cells; and the processing unit 302 is configured to train a multipath prediction model based on the measurement result, where the multipath prediction model is used to predict a multipath characteristic for communication between the terminal device and a network device in the preset geographical range.

For example, the measurement result of the first signal further includes indication information of the first grid cell.

Optionally, the communication unit 301 is further configured to send second information to the terminal device, where the second information indicates a manner of determining a first reference point of the first signal, the first reference point is determined based on the first information, and the first reference point is used to determine the first grid cell.

Optionally, the communication unit 301 is further configured to send third information to the terminal device, where the third information indicates a manner of obtaining the grid cells by dividing the preset geographical area.

Optionally, the first information includes the receiving parameter of the first signal, and the processing unit 302 is further configured to: determine, based on the sending parameter of the first signal, a second reference point corresponding to the first signal; determine a second grid cell in the preset geographical range based on the second reference point; and determine a third grid cell based on the first grid cell and the second network area; and when training the multipath prediction model based on the measurement result, the processing unit 302 is specifically configured to: train the multipath prediction model based on the first information in the measurement result and the third grid cell.

Optionally, the first information includes the receiving parameter and the sending parameter of the first signal, and the processing unit 302 is further configured to: determine, based on the first information, a first reference point corresponding to the first signal, and determine the first grid cell in the preset geographical range based on the first reference point; and when training the multipath prediction model based on the measurement result, the processing unit 302 is specifically configured to train the multipath prediction model based on the measurement result and the first grid cell.

For example, the sending parameter of the first signal includes an angle of departure of the first signal.

For example, the receiving parameter of the first signal includes at least one of the following: an angle of arrival of the first signal, time of arrival of the first signal, or signal strength of the first signal.

Optionally, the processing unit 302 is further configured to: determine location information of the terminal device in a first time period based on current location information and at least one piece of historical location information that are of the terminal device, where a start moment of the first time period is not earlier than current time, and determine multipath distribution in the preset geographical range in the first time period based on the location information of the terminal device in the first time period and the multipath prediction model.

The communication unit 301 is further configured to send fourth information to the terminal device, where the fourth information indicates related information of multipath distribution in the preset geographical range in the time period.

For example, input data of the multipath prediction model includes at least one of the following: environment information of the preset geographical range, location information of the network device, and location information of the terminal device; and output information of the multipath prediction model includes multipath information corresponding to each grid cell in the preset geographical range.

For example, the multipath information includes at least one of the following parameters of each path: a confidence, an angle of departure of a signal, an angle of arrival of the signal, signal strength, or time of arrival of the signal, and the confidence indicates a probability that there are multiple paths in a corresponding grid cell.

In an implementation, the communication apparatus may be specifically configured to implement the method performed by the terminal device in the embodiment in FIG. 8. The apparatus may be the terminal device, may be a chip or a chip set in the terminal device, or a part of the chip that is configured to perform a related method function. The communication unit 301 is configured to receive a first signal from a network device; and the processing unit 302 is configured to: determine a sending parameter and a receiving parameter of the first signal, determine, based on the sending parameter and the receiving parameter of the first signal, a corresponding first grid cell of a path corresponding to the first signal in a preset geographical range, and the preset geographical range is divided into a plurality of grid cells, and train a multipath prediction model based on the sending parameter of the first signal, the receiving parameter of the first signal, and the first grid cell, where the multipath prediction model is used to predict a multipath characteristic for communication between the terminal device and the network device in the preset geographical range.

When training the multipath prediction model based on the sending parameter of the first signal, the receiving parameter of the first signal, and the first grid cell, the processing unit 302 is specifically configured to: input environment information of the preset geographical range, location information of the network device, and location information of the terminal device into the multipath prediction model, to obtain output data of the multipath prediction model, where the output data includes at least one of the following parameters of each path in each grid cell in the preset geographical range: a confidence, a sending parameter of a signal, or a receiving parameter of the signal, and the confidence indicates a probability that there are multiple paths in a corresponding grid cell; compare the sending parameter of the first signal, the receiving parameter of the first signal, and the first grid cell with the output data of the multipath prediction model, to obtain a comparison result; and adjust the multipath prediction model based on the comparison result.

Optionally, the communication unit 301 is further configured to receive the environment information of the preset geographical range and/or the location information of the network device from the network device.

Optionally, when determining, based on the sending parameter and the receiving parameter of the first signal, the corresponding first grid cell of the path corresponding to the first signal in the preset geographical range, the processing unit 302 is specifically configured to: determine, based on the sending parameter and the receiving parameter of the first signal, a reference point corresponding to the first signal; and determine the first grid cell based on the reference point corresponding to the first signal.

Optionally, the communication unit 301 is further configured to receive first information from the network device, where the first information indicates a manner of determining the reference point.

Optionally, the communication unit 301 is further configured to receive second information from the network device, where the second information indicates a manner of obtaining the grid cells by dividing the preset geographical area.

For example, the sending parameter includes an angle of departure of a signal.

For example, the receiving parameter includes at least one of the following: an angle of arrival of the signal, time of arrival of the signal, or signal strength.

In an implementation, the communication apparatus may be specifically configured to implement the method performed by the network device in the embodiment in FIG. 8. The apparatus may be the network device, may be a chip or a chip set in the network device, or a part of the chip that is configured to perform a related method function. The communication unit 301 is configured to communicate with a terminal device; and the processing unit 302 is configured to: send a first signal to the terminal device via the communication unit 301, and send at least one of the following to the terminal device via the communication unit 301: environment information of a preset geographical range, location information of the network device, first information, or second information, where the first information indicates a manner of determining a reference point, the reference point is used to determine a corresponding first grid cell of a path corresponding to the first signal in the preset geographical range, and the second information indicates a manner of obtaining grid cells by dividing the preset geographical area.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in this embodiment of this application, further refer to the related descriptions in the method embodiments.

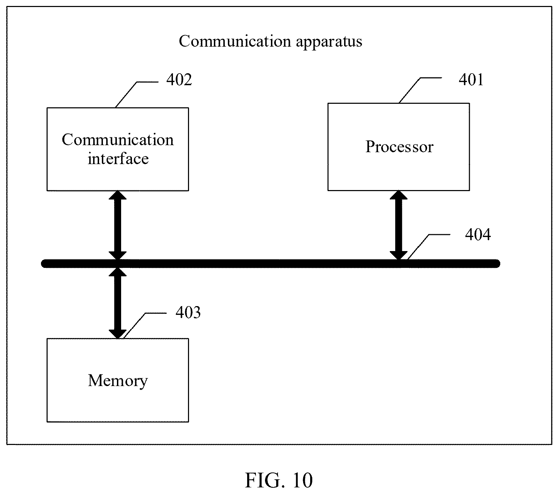

In a possible manner, the communication apparatus may be shown in FIG. 10. The apparatus may be a communication device or a chip in the communication device. The communication device may be the terminal device in the foregoing embodiments, or may be the network device in the foregoing embodiments. The apparatus includes a processor 401 and a communication interface 402, and may further include a memory 403. The processing unit 302 may be the processor 401. The communication unit 301 may be the communication interface 402. Optionally, the processor 401 and the memory 403 may also be integrated together.

The processor 401 may be a CPU, a digital processing unit, or the like. The communication interface 402 may be a transceiver, an interface circuit such as a transceiver circuit, a transceiver chip, or the like. The apparatus further includes the memory 403, configured to store a program to be executed by the processor 401. The memory 403 may be a nonvolatile memory, for example, a hard disk drive (hard disk drive, HDD) or a solid-state drive (solid-state drive, SSD); or may be a volatile memory (volatile memory), for example, a random-access memory (random-access memory, RAM). The memory 403 is any other medium that can be used to carry or store expected program code in a form of instructions or a data structure and that can be accessed by a computer, but is not limited thereto.

The processor 401 is configured to execute the program code stored in the memory 403, and is specifically configured to perform an action of the processing unit 302. Details are not described herein again in this application. The communication interface 402 is specifically configured to perform an action of the communication unit 301. Details are not described herein again in this application.

In embodiments of this application, a specific connection medium between the communication interface 402, the processor 401, and the memory 403 is not limited. In embodiments of this application, in FIG. 10, the memory 403, the processor 401, and the communication interface 402 are connected through a bus 404. The bus is represented by a bold line in FIG. 10. A connection manner between other components is merely an example for description, and is not limited thereto. Buses may be classified into an address bus, a data bus, a control bus, and the like. For ease of representation, only one thick line is for representing the bus in FIG. 10, but this does not mean that there is only one bus or only one type of bus.

An embodiment of the present invention further provides a computer-readable storage medium, configured to store computer software instructions that need to be executed by the foregoing processor. The computer-readable storage medium includes a program that needs to be executed by the foregoing processor.

An embodiment of this application further provides a communication system, including a communication apparatus configured to implement a function of the terminal device in the embodiment in FIG. 6 and a communication apparatus configured to implement a function of the network device in the embodiment in FIG. 6.

An embodiment of this application further provides a communication system, including a communication apparatus configured to implement a function of the terminal device in the embodiment in FIG. 8 and a communication apparatus configured to implement a function of the network device in the embodiment in FIG. 8.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, wherein the method comprises:

   receiving a first signal from a network device;
   determining first information, wherein the first information comprises a receiving parameter of the first signal, or the first information comprises a sending parameter and a receiving parameter of the first signal, the first information is used to determine a corresponding first grid cell of a path corresponding to the first signal in a preset geographical range, and the preset geographical range is divided into a plurality of grid cells; and
   sending a measurement result of the first signal to the network device, wherein the measurement result comprises the first information.

2. The method according to claim 1, wherein the method further comprises:

   determining, based on the first information, a first reference point corresponding to the first signal; and
   determining the first grid cell in the preset geographical range based on the first reference point corresponding to the first signal; and
   the measurement result of the first signal further comprises indication information of the first grid cell.

3. The method according to claim 2, wherein the method further comprises:
   receiving second information from the network device, wherein the second information indicates a manner of determining the first reference point.

4. The method according to any one of claims 1 to 3, wherein the method further comprises:
   receiving third information from the network device, wherein the third information indicates a manner of obtaining the grid cells by dividing the preset geographical area.

5. The method according to any one of claims 1 to 4, wherein the sending parameter of the first signal comprises an angle of departure of the first signal.

6. The method according to any one of claims 1 to 5, wherein the receiving parameter of the first signal comprises at least one of the following: an angle of arrival of the first signal, time of arrival of the first signal, or signal strength of the first signal.

7. The method according to any one of claims 1 to 6, wherein the method further comprises:
   receiving fourth information from the network device, wherein the fourth information indicates related information of multipath distribution in the preset geographical range in a first time period.

8. A communication method, wherein the method comprises:

   sending a first signal to a terminal device;
   receiving a measurement result of the first signal from the terminal device, wherein the measurement result comprises first information, the first information comprises a receiving parameter of the first signal, or the first information comprises a sending parameter and a receiving parameter of the first signal, the first information is used for a corresponding first grid cell of a path corresponding to the first signal in a preset geographical range, and the preset geographical range is divided into a plurality of grid cells; and
   training a multipath prediction model based on the measurement result, wherein the multipath prediction model is used to predict a multipath characteristic for communication between the terminal device and a network device in the preset geographical range.

9. The method according to claim 8, wherein the measurement result of the first signal further comprises indication information of the first grid cell.

10. The method according to claim 8 or 9, wherein the method further comprises:
    sending second information to the terminal device, wherein the second information indicates a manner of determining a first reference point of the first signal, the first reference point is determined based on the first information, and the first reference point is used to determine the first grid cell.

11. The method according to any one of claims 8 to 10, wherein the method further comprises:
sending third information to the terminal device, wherein the third information indicates a manner of obtaining the grid cells by dividing the preset geographical area.

12. The method according to any one of claims 9 to 11, wherein the first information comprises the receiving parameter of the first signal, and the method further comprises:

determining, based on the sending parameter of the first signal, a second reference point corresponding to the first signal;
determining a second grid cell in the preset geographical range based on the second reference point; and
determining a third grid cell based on the first grid cell and the second network area; and
training the multipath prediction model based on the measurement result comprises:
training the multipath prediction model based on the first information in the measurement result and the third grid cell.

13. The method according to claim 8, wherein the first information comprises the receiving parameter and the sending parameter of the first signal, and the method further comprises:

determining, based on the first information, a first reference point corresponding to the first signal; and
determining the first grid cell in the preset geographical range based on the first reference point; and
training the multipath prediction model based on the measurement result comprises:
training the multipath prediction model based on the measurement result and the first grid cell.

14. The method according to any one of claims 8 to 13, wherein the sending parameter of the first signal comprises an angle of departure of the first signal.

15. The method according to any one of claims 8 to 14, wherein the receiving parameter of the first signal comprises at least one of the following: an angle of arrival of the first signal, time of arrival of the first signal, or signal strength of the first signal.

16. The method according to any one of claims 8 to 15, wherein the method further comprises:

determining location information of the terminal device in a first time period based on current location information and at least one piece of historical location information that are of the terminal device, wherein a start moment of the first time period is not earlier than current time;
determining multipath distribution in the preset geographical range in the first time period based on the location information of the terminal device in the first time period and the multipath prediction model; and
sending fourth information to the terminal device, wherein the fourth information indicates related information of multipath distribution in the preset geographical range in the first time period.

17. The method according to any one of claims 8 to 16, wherein input data of the multipath prediction model comprises at least one of the following: environment information of the preset geographical range, location information of the network device, and location information of the terminal device; and
output information of the multipath prediction model comprises multipath information corresponding to each grid cell in the preset geographical range.

18. The method according to claim 17, wherein the multipath information comprises at least one of the following parameters of each path: a confidence, an angle of departure of a signal, an angle of arrival of the signal, signal strength, or time of arrival of the signal, and the confidence indicates a probability that there are multiple paths in a corresponding grid cell.

19. A communication method, wherein the method comprises:

receiving a first signal from a network device;
determining a sending parameter and a receiving parameter of the first signal;
determining, based on the sending parameter and the receiving parameter of the first signal, a corresponding first grid cell of a path corresponding to the first signal in a preset geographical range, and the preset geographical range is divided into a plurality of grid cells; and

training a multipath prediction model based on the sending parameter of the first signal, the receiving parameter of the first signal, and the first grid cell, wherein the multipath prediction model is used to predict a multipath characteristic for communication between the terminal device and the network device in the preset geographical range.

20. The method according to claim 19, wherein training the multipath prediction model based on the sending parameter of the first signal, the receiving parameter of the first signal, and the first grid cell comprises:

inputting environment information of the preset geographical range, location information of the network device, and location information of the terminal device into the multipath prediction model, to obtain output data of the multipath prediction model, wherein the output data comprises at least one of the following parameters of each path in each grid cell in the preset geographical range: a confidence, a sending parameter of a signal, or a receiving parameter of the signal, and the confidence indicates a probability that there are multiple paths in a corresponding grid cell;

comparing the sending parameter of the first signal, the receiving parameter of the first signal, and the first grid cell with the output data of the multipath prediction model, to obtain a comparison result; and

adjusting the multipath prediction model based on the comparison result.

21. The method according to claim 19 or 20, wherein the method further comprises:
receiving the environment information of the preset geographical range and/or the location information of the network device from the network device.

22. The method according to any one of claims 19 to 21, wherein determining, based on the sending parameter and the receiving parameter of the first signal, the corresponding first grid cell of the path corresponding to the first signal in the preset geographical range comprises:

determining, based on the sending parameter and the receiving parameter of the first signal, a reference point corresponding to the first signal; and

determining the first grid cell based on the reference point corresponding to the first signal.

23. The method according to claim 22, wherein the method further comprises:
receiving first information from the network device, wherein the first information indicates a manner of determining the reference point.

24. The method according to any one of claims 19 to 23, wherein the method further comprises:
receiving second information from the network device, wherein the second information indicates a manner of obtaining the grid cells by dividing the preset geographical area.

25. The method according to any one of claims 19 to 24, wherein the sending parameter comprises an angle of departure of a signal.

26. The method according to any one of claims 19 to 25, wherein the receiving parameter comprises at least one of the following: an angle of arrival of the signal, time of arrival of the signal, or signal strength.

27. A communication method, wherein the method comprises:

sending a first signal to a terminal device; and

sending at least one of the following to the terminal device: environment information of a preset geographical range, location information of the network device, first information, or second information, wherein the first information indicates a manner of determining a reference point, the reference point is used to determine a corresponding first grid cell of a path corresponding to the first signal in the preset geographical range, and the second information indicates a manner of obtaining grid cells by dividing the preset geographical area.

28. A communication apparatus, wherein the apparatus comprises:

a communication unit, configured to receive a first signal from a network device; and

a processing unit, configured to determine first information, wherein the first information comprises a receiving parameter of the first signal, or the first information comprises a sending parameter and a receiving parameter of the first signal, the first information is used to determine a corresponding first grid cell of a path corresponding to the first signal in a preset geographical range, and the preset geographical range is divided into a plurality of grid cells, wherein
the communication unit is further configured to send a measurement result of the first signal to the network device, wherein the measurement result comprises the first information.

29. The apparatus according to claim 28, wherein the processing unit is further configured to:

   determine, based on the first information, a first reference point corresponding to the first signal; and
   determine the first grid cell in the preset geographical range based on the first reference point corresponding to the first signal; and
   the measurement result of the first signal further comprises indication information of the first grid cell.

30. The apparatus according to claim 29, wherein the communication unit is further configured to:
   receive second information from the network device, wherein the second information indicates a manner of determining the first reference point.

31. The apparatus according to any one of claims 28 to 30, wherein the communication unit is further configured to:
   receive third information from the network device, wherein the third information indicates a manner of obtaining the grid cells by dividing the preset geographical area.

32. The apparatus according to any one of claims 28 to 31, wherein the sending parameter of the first signal comprises an angle of departure of the first signal.

33. The apparatus according to any one of claims 28 to 32, wherein the receiving parameter of the first signal comprises at least one of the following: an angle of arrival of the first signal, time of arrival of the first signal, or signal strength of the first signal.

34. The apparatus according to any one of claims 28 to 33, wherein the communication unit is further configured to:
   receive fourth information from the network device, wherein the fourth information indicates related information of multipath distribution in the preset geographical range in a first time period.

35. A communication apparatus, wherein the apparatus comprises:

   a communication unit, configured to: send a first signal to a terminal device, and
   receive a measurement result of the first signal from the terminal device, wherein the measurement result comprises first information, the first information comprises a receiving parameter of the first signal, or the first information comprises a sending parameter and a receiving parameter of the first signal, the first information is used for a corresponding first grid cell of a path corresponding to the first signal in a preset geographical range, and the preset geographical range is divided into a plurality of grid cells; and
   a processing unit, configured to train a multipath prediction model based on the measurement result, wherein the multipath prediction model is used to predict a multipath characteristic for communication between the terminal device and a network device in the preset geographical range.

36. The apparatus according to claim 35, wherein the measurement result of the first signal further comprises indication information of the first grid cell.

37. The apparatus according to claim 35 or 36, wherein the communication unit is further configured to:
   send second information to the terminal device, wherein the second information indicates a manner of determining a first reference point of the first signal, the first reference point is determined based on the first information, and the first reference point is used to determine the first grid cell.

38. The apparatus according to any one of claims 35 to 37, wherein the communication unit is further configured to:
   send third information to the terminal device, wherein the third information indicates a manner of obtaining the grid cells by dividing the preset geographical area.

39. The apparatus according to any one of claims 36 to 38, wherein the first information comprises the receiving parameter of the first signal, and the processing unit is further configured to:

determine, based on the sending parameter of the first signal, a second reference point corresponding to the first signal;

determine a second grid cell in the preset geographical range based on the second reference point; and

determine a third grid cell based on the first grid cell and the second network area; and

when training the multipath prediction model based on the measurement result, the processing unit is specifically configured to:

train the multipath prediction model based on the first information in the measurement result and the third grid cell.

40. The apparatus according to claim 35, wherein the first information comprises the receiving parameter and the sending parameter of the first signal, and the processing unit is further configured to:

determine, based on the first information, a first reference point corresponding to the first signal, and

determine the first grid cell in the preset geographical range based on the first reference point; and

when training the multipath prediction model based on the measurement result, the processing unit is specifically configured to:

train the multipath prediction model based on the measurement result and the first grid cell.

41. The apparatus according to any one of claims 35 to 40, wherein the sending parameter of the first signal comprises an angle of departure of the first signal.

42. The apparatus according to any one of claims 35 to 41, wherein the receiving parameter of the first signal comprises at least one of the following: an angle of arrival of the first signal, time of arrival of the first signal, or signal strength of the first signal.

43. The apparatus according to any one of claims 35 to 42, wherein
the processing unit is further configured to:

determine location information of the terminal device in a first time period based on current location information and at least one piece of historical location information that are of the terminal device, wherein a start moment of the first time period is not earlier than current time, and

determine multipath distribution in the preset geographical range in the first time period based on the location information of the terminal device in the first time period and the multipath prediction model; and

the communication unit is further configured to:

send fourth information to the terminal device, wherein the fourth information indicates related information of multipath distribution in the preset geographical range in the first time period.

44. The apparatus according to any one of claims 35 to 43, wherein input data of the multipath prediction model comprises at least one of the following: environment information of the preset geographical range, location information of the network device, and location information of the terminal device; and

output information of the multipath prediction model comprises multipath information corresponding to each grid cell in the preset geographical range.

45. The apparatus according to claim 44, wherein the multipath information comprises at least one of the following parameters of each path: a confidence, an angle of departure of a signal, an angle of arrival of the signal, signal strength, or time of arrival of the signal, and the confidence indicates a probability that there are multiple paths in a corresponding grid cell.

46. A communication apparatus, wherein the apparatus comprises:

a communication unit, configured to receive a first signal from a network device; and

a processing unit, configured to: determine a sending parameter and a receiving parameter of the first signal; determine, based on the sending parameter and the receiving parameter of the first signal, a corresponding first grid cell of a path corresponding to the first signal in a preset geographical range, and the preset geographical range is divided into a plurality of grid cells; and

train a multipath prediction model based on the sending parameter of the first signal, the receiving parameter of the first signal, and the first grid cell, wherein the multipath prediction model is used to predict a multipath characteristic for communication between the terminal device and the network device in the preset geographical range.

**47.** The apparatus according to claim 46, wherein when training the multipath prediction model based on the sending parameter of the first signal, the receiving parameter of the first signal, and the first grid cell, the processing unit is specifically configured to:

input environment information of the preset geographical range, location information of the network device, and location information of the terminal device into the multipath prediction model, to obtain output data of the multipath prediction model, wherein the output data comprises at least one of the following parameters of each path in each grid cell in the preset geographical range: a confidence, a sending parameter of a signal, or a receiving parameter of the signal, and the confidence indicates a probability that there are multiple paths in a corresponding grid cell;
compare the sending parameter of the first signal, the receiving parameter of the first signal, and the first grid cell with the output data of the multipath prediction model, to obtain a comparison result; and
adjust the multipath prediction model based on the comparison result.

**48.** The apparatus according to claim 46 or 47, wherein the communication unit is further configured to:
receive the environment information of the preset geographical range and/or the location information of the network device from the network device.

**49.** The apparatus according to any one of claims 46 to 48, wherein when determining, based on the sending parameter and the receiving parameter of the first signal, the corresponding first grid cell of the path corresponding to the first signal in the preset geographical range, the processing unit is specifically configured to:

determine, based on the sending parameter and the receiving parameter of the first signal, a reference point corresponding to the first signal; and
determine the first grid cell based on the reference point corresponding to the first signal.

**50.** The apparatus according to claim 49, wherein the communication unit is further configured to:
receive first information from the network device, wherein the first information indicates a manner of determining the reference point.

**51.** The apparatus according to any one of claims 46 to 50, wherein the communication unit is further configured to:
receive second information from the network device, wherein the second information indicates a manner of obtaining the grid cells by dividing the preset geographical area.

**52.** The apparatus according to any one of claims 46 to 51, wherein the sending parameter comprises an angle of departure of a signal.

**53.** The apparatus according to any one of claims 46 to 52, wherein the receiving parameter comprises at least one of the following: an angle of arrival of the signal, time of arrival of the signal, or signal strength.

**54.** A communication apparatus, wherein the apparatus comprises:

a communication unit, configured to communicate with a terminal device; and
a processing unit, configured to: send a first signal to the terminal device via the communication unit, and send at least one of the following to the terminal device via the communication unit: environment information of a preset geographical range, location information of the network device, first information, or second information, wherein the first information indicates a manner of determining a reference point, the reference point is used to determine a corresponding first grid cell of a path corresponding to the first signal in the preset geographical range, and the second information indicates a manner of obtaining grid cells by dividing the preset geographical area.

**55.** A communication apparatus, comprising a processor and a memory, wherein the memory is configured to store program instructions, and when the processor executes the program instructions, the method according to any one of claims 1 to 7, or the method according to any one of claims 8 to 18, or the method according to any one of claims 19 to 26, or the method according to claim 27 is performed.

**56.** A computer-readable storage medium, wherein the computer-readable storage medium stores computer-readable instructions, and when the computer-readable instructions are run on a communication apparatus, the method according to any one of claims 1 to 7, or the method according to any one of claims 8 to 18, or the method according to any one of claims 19 to 26, or the method according to claim 27 is performed.

57. A computer program product, wherein when the computer program product runs on a device, the device is enabled to perform the method according to any one of claims 1 to 7, or the method according to any one of claims 8 to 18, or the method according to any one of claims 19 to 26, or the method according to claim 27.

FIG. 1

FIG. 2

First-layer CNN   Second-layer CNN   Third-layer CNN   Fourth-layer CNN   Fifth-layer CNN   Sixth-layer CNN

Input data → [ ] → [ ] → [ ] → [ ] → [ ] → [ ] → Output data

FIG. 3

FIG. 4

Manner of training a multipath prediction model

| Air interface collection and online training | Air interface collection and offline training | Non-air interface collection and offline training |

FIG. 5

Terminal device                    Network device

S601: First signal

S602: Determine first information

S603: Measurement result of the first signal

S604: Train a multipath prediction model based on the measurement result

FIG. 6

FIG. 7A

FIG. 7B

| | | |
|---|---|---|
| [0, 0, 0, 0, 0] | [0, 0, 0, 0, 0] | [0, 0, 0, 0, 0] |
| [0, 0, 0, 0, 0] | [1, 0.67, −0.33, −0.8, 0.30] | [1, 0.3, 0.05, −1.1, 0.55] |
| [1, −0.83, −0.67, −1.2, 0.6] | [0, 0, 0, 0, 0] | [0, 0, 0, 0, 0] |

FIG. 7C

Terminal device

Network device

S801: First signal

S802: Determine a sending parameter and a receiving parameter of the first signal

S803: Determine, based on the sending parameter and the receiving parameter of the first signal, a corresponding first grid cell of a path corresponding to the first signal in a preset geographical range

S804: Train a multipath prediction model based on the sending parameter of the first signal, the receiving parameter of the first signal, and the first grid cell

FIG. 8

Communication apparatus

Communication unit — 301

Processing unit — 302

FIG. 9

Communication apparatus

402

Communication
interface

401

Processor

404

403

Memory

FIG. 10

## INTERNATIONAL SEARCH REPORT

| | International application No. |
|---|---|
| | **PCT/CN2023/077963** |

| A. | CLASSIFICATION OF SUBJECT MATTER |
|---|---|

H04W24/00(2009.01)i

According to International Patent Classification (IPC) or to both national classification and IPC

| B. | FIELDS SEARCHED |
|---|---|

Minimum documentation searched (classification system followed by classification symbols)

IPC: H04W,G01S

Documentation searched other than minimum documentation to the extent that such documents are included in the fields searched

Electronic data base consulted during the international search (name of data base and, where practicable, search terms used)

3GPP, CNTXT, ENTXTC, WPABS: 多径, 模型, 地理, 区域, 网格, 训练, 参考, 预测, 位置, model, path, multi+, train+, geography, area, grid, reference, predict+, position

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022126373 A1 (NOKIA TECHNOLOGIES OY et al.) 23 June 2022 (2022-06-23) description, paragraphs 3 and 35-115 | 1-57 |
| A | CN 106488548 A (BEIJING UNIVERSITY OF POSTS AND TELECOMMUNICATIONS) 08 March 2017 (2017-03-08) entire document | 1-57 |
| A | CN 107333232 A (HUAWEI TECHNOLOGIES CO., LTD.) 07 November 2017 (2017-11-07) entire document | 1-57 |
| A | CN 111464937 A (BEIJING UNIVERSITY OF POSTS AND TELECOMMUNICATIONS) 28 July 2020 (2020-07-28) entire document | 1-57 |
| A | CN 113543305 A (VIVO COMMUNICATION TECHNOLOGY CO., LTD.) 22 October 2021 (2021-10-22) entire document | 1-57 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 October 2023** | **30 October 2023** |

| Name and mailing address of the ISA/CN | Authorized officer |
|---|---|
| China National Intellectual Property Administration (ISA/CN) China No. 6, Xitucheng Road, Jimenqiao, Haidian District, Beijing 100088 | |
| | Telephone No. |

Form PCT/ISA/210 (second sheet) (July 2022)

**INTERNATIONAL SEARCH REPORT**
Information on patent family members

International application No.

**PCT/CN2023/077963**

| Patent document cited in search report | | | Publication date (day/month/year) | Patent family member(s) | | | Publication date (day/month/year) |
|---|---|---|---|---|---|---|---|
| WO | 2022126373 | A1 | 23 June 2022 | None | | | |
| CN | 106488548 | A | 08 March 2017 | None | | | |
| CN | 107333232 | A | 07 November 2017 | WO | 2017185664 | A1 | 02 November 2017 |
| | | | | EP | 3419353 | A1 | 26 December 2018 |
| | | | | US | 2019021068 | A1 | 17 January 2019 |
| CN | 111464937 | A | 28 July 2020 | None | | | |
| CN | 113543305 | A | 22 October 2021 | WO | 2021213376 | A1 | 28 October 2021 |
| | | | | KR | 20230002832 | A | 05 January 2023 |
| | | | | US | 2023043111 | A1 | 09 February 2023 |
| | | | | EP | 4142384 | A1 | 01 March 2023 |

Form PCT/ISA/210 (patent family annex) (July 2022)